(19) Europäisches Patentamt
European Patent Office
Office européen des brevets

(11) **EP 3 663 956 A1**

(12) **EUROPÄISCHE PATENTANMELDUNG**

(43) Veröffentlichungstag:
**10.06.2020  Patentblatt 2020/24**

(21) Anmeldenummer: **18209811.1**

(22) Anmeldetag: **03.12.2018**

(51) Int Cl.:
*G06F 21/72* (2013.01)       *G06F 21/85* (2013.01)
*G06F 21/60* (2013.01)       *G06F 21/73* (2013.01)
*G06F 21/44* (2013.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Steen Harbach AG**
**51371 Leverkusen (DE)**

(72) Erfinder: **Bartsch, Witali**
**51371 Leverkusen (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **MIKROCONTROLLER**

(57)    Die vorliegende Erfindung betrifft einen Mikrocontroller umfassend einen Speicherbaustein zum Speichern eines digitalen Zertifikats, ein Netzwerkmodul für die Herstellung einer Verbindung mit einem Netzwerk und einen Prozessor. Dabei ist der Prozessor dazu ausgelegt, eine Verbindung mit einem in dem Netzwerk befindlichen Netzwerk-Computer aufzubauen, bei dem Netzwerk-Computer nach einem digitalen Zertifikat anzufragen, das digitale Zertifikat von dem Netzwerk-Computer zu empfangen, das digitale Zertifikat im Speicherbaustein abzuspeichern, und mit dem Netzwerk-Computer Nutzerdaten auszutauschen, sofern eine vorherige Verifikation des digitalen Zertifikats des Mikrocontrollers erfolgreich war. Ferner betrifft die vorliegende Erfindung ein Verfahren für die Kommunikation zwischen einem Mikrocontroller und einem Netzwerk-Computer sowie einen Netzwerk-Computer und ein Kommunikationssystem.

Fig. 3

**Beschreibung**

Die vorliegende Erfindung betrifft einen Mikrocontroller zur Steuerung einer elektrischen und/oder einer elektronischen Vorrichtung sowie ein Verfahren für die Kommunikation zwischen einem Mikrocontroller und einem Netzwerk-Computer. Ferner betrifft die vorliegende Erfindung einen entsprechenden Netzwerk-Computer sowie ein Kommunikationssystem umfassend einen Mikrocontroller und einen Netzwerk-Computer.

Mikrocontroller sind in der heutigen Zeit nicht mehr aus unserem Alltag wegzudenken. Zahlreiche elektrische und/oder elektronischer Alltagsgegenstände werden heutzutage durch Mikrocontroller gesteuert. Hierzu gehören beispielsweise Lampen und LEDs, Waschmaschinen und Trockner, Heizkörper bzw. Heizkörpersteuerventile, Fernseher, Videorecorder und DVD-Spieler.

Dabei weisen Mikrocontroller in der Regel zumindest einen Prozessor und einen oder mehrere Speicherbausteine auf.

Bei vielen der vorstehend genannten elektrischen und/oder elektronischen Vorrichtungen ist es wünschenswert, dass diese auch aus der Ferne angesteuert werden können. Hierzu umfassen entsprechende Mikrocontroller ein Netzwerkmodul zur Verbindung des Mikrocontrollers mit einem Netzwerk. Bei dem Netzwerk-Modul kann es sich insbesondere um ein LAN-Modul, ein WLAN-Modul oder ein Mobilfunk-Modul handeln, wobei das Mobilfunk-Modul insbesondere ein GSM-, GPRS-, EDGE-, UMTS- und/oder ein LTE-Modul umfassen kann.

Die Ausstattung eines Mikrocontrollers mit einem Netzwerk-Modul eröffnet zahlreiche neue Anwendungsmöglichkeiten. So wird durch den Einsatz eines Mikrocontrollers mit einem Netzwerk-Modul beispielsweise ermöglicht, herkömmliche Haushaltsgeräte miteinander zu vernetzen und diese bequem vom Smartphone aus zu steuern. So kann beispielsweise ein Heizkörper in einer Wohnung bei Bedarf von unterwegs durch die Verwendung einer entsprechenden App eingeschaltet werden. Zudem kann beispielsweise die Steuerung eines Heizkörpers automatisch in Abhängigkeit einer durch einen Thermometer gemessenen Außentemperatur erfolgen. Auch kann die Ansteuerung elektrischer Jalousien in Abhängigkeit der aktuell eingestellten Parameter eines in einem gemeinsamen Netzwerk befindlichen Heizkörpers erfolgen.

Es ist daher nicht verwunderlich, dass die Ausstattung von Mikrocontrollern mit Netzwerk-Modulen mit zu der rasanten Entwicklung auf dem Gebiet der Smart-Home-Technik beigetragen hat.

Ebenso wird die Entwicklung auf dem Gebiet der IoT (Internet of Things bzw. Internet der Dinge) sowie auf dem Gebiet der Industrie 4.0 durch moderne Mikrocontroller mit integrierten Netzwerk-Modulen beflügelt.

Durch die zunehmende Anzahl elektrischer und/oder elektronischer Vorrichtungen, die über ein Netzwerk miteinander verbunden sind, stellt sich zunehmend die Frage, wie eine sichere und effiziente Kommunikation zwischen mehreren Mikrocontrollern und einem in einem gemeinsamen Netzwerk befindlichen Netzwerk-Computer erreicht werden kann.

Ein in diesem Zusammenhang zentraler Aspekt für die sichere Kommunikation ist der Einsatz digitaler Zertifikate, durch die eine Authentifizierung zwischen einem Mikrocontroller und einem Netzwerk-Computer erfolgen kann. Ein digitales Zertifikat enthält insbesondere einen digitalen Authentifizierungsschlüssel, mittels dessen die Identität eines ersten Kommunikationspartners durch einen zweiten Kommunikationspartner geprüft werden kann. Dadurch wird beispielsweise vermieden, dass ein nicht befugter Außenstehender Steuerbefehle an einen Mikrocontroller senden und somit die Kontrolle über ein oder mehrere elektrische und/oder elektronische Komponenten erhalten kann.

Damit ein Mikrocontroller mit einem Netzwerk-Computer kommunizieren kann, muss der Mikrocontroller zuvor ein auf ihn abgestimmtes digitales Zertifikat erhalten. Hierfür sind prinzipiell verschiedene Möglichkeiten denkbar.

Eine Möglichkeit wäre, seitens des Mikrocontroller-Herstellers für jeden Mikrocontroller ein digitales Zertifikat zu erstellen und dieses Zertifikat im Speicherbaustein des Mikrocontrollers zu hinterlegen. Nachteilig hierbei ist, dass dadurch die Daten betreffend das digitale Zertifikat des Mikrocontrollers durch den Hersteller bekannt sind. Ein Hacker-Angriff auf die IT-Systeme des Herstellers könnte dazu führen, dass sensible Daten über den Mikrocontroller gestohlen und von Unbefugten missbräuchlich verwendet werden.

Eine weitere Möglichkeit für die Ausstellung eines digitalen Zertifikats wäre, jeden einzelnen Mikrocontroller über eine nach außen entkoppelte Verbindung mit einem digitalen Zertifikat zu versehen. Hierzu könnte beispielsweise ein tragbarer Computer zum Einsatz kommen, der eine kabelgebundene Verbindung mit dem Mikrocontroller aufbaut, ein digitales Zertifikat für den Mikrocontroller ausstellt und an den Mikrocontroller übermittelt. Der Mikrocontroller wird somit aus der Nähe mit einem digitalen Zertifikat versehen. Der Vorteil dieser Methode wäre, dass der Mikrocontroller-Hersteller keinerlei Informationen über das digitale Zertifikat bzw. einen etwaigen Authentifizierungschlüssel des Mikrocontrollers hätte. Allerdings wäre es bei diesem Verfahren nachteilig, dass sich ein Mitarbeiter mit dem tragbaren Computer zu jedem einzelnen Mikrocontroller begeben müsste, um jeden einzelnen Mikrocontroller mit einem digitalen Zertifikat zu versehen. Insbesondere dann, wenn zahlreiche Mikrocontroller mit digitalen Zertifikaten versehen werden sollen, ist diese alternative Möglichkeit sehr zeit- und kostenaufwändig und daher nicht besonders geeignet. Zudem würde die Verwendung eines tragbaren Computers zwangsläufig auch bedeuten, dass der für das Ausstellen der Zertifikate notwendige Stammschlüssel (root key) ebenfalls auf dem tragbaren Rechner mitgeführt werden müsste. Eine solche Maßnahme wäre ein Verstoß gegen die geltenden Arbeitsprinzipien einer Stammzertifizierungsstelle, die ihren Stammschlüssel jederzeit bestmöglich sichern muss.

Die vorstehend erläuterten Möglichkeiten sind entweder als unsicher oder als ineffizient anzusehen.

Aufgabe der vorliegenden Erfindung ist es daher, einen Mikrocontroller zur Steuerung einer elektrischen und/oder einer elektronischen Vorrichtung sowie ein entsprechendes Verfahren für die Kommunikation zwischen einem Mikrocontroller und einem Netzwerk-Computer bereitzustellen, bei denen eine effiziente und sichere Ausstellung eines digitalen Zertifikats für einen Mikrocontroller ermöglicht wird. Entsprechend ist es Aufgabe der vorliegenden Erfindung, einen Netzwerk-Computer sowie ein Kommunikationssystem umfassend einen Mikrocontroller und einen Netzwerk-Computer bereitzustellen, die eine effiziente und sichere Ausstellung eines digitalen Zertifikats für einen Mikrocontroller erlauben.

Zur Lösung der vorstehend genannten Aufgabe wird ein Mikrocontroller, ein Verfahren für die Kommunikation zwischen einem Mikrocontroller und einem Netzwerk-Computer, ein Netzwerk-Computer sowie ein entsprechendes Kommunikationssystem gemäß den unabhängigen Ansprüchen vorgeschlagen. Weitere vorteilhafte Ausführungen der vorliegenden Erfindung sind in den Unteransprüchen definiert.

Insbesondere wird zur Lösung der vorstehend genannten Aufgabe ein Mikrocontroller zur Steuerung einer elektrischen und/oder einer elektronischen Vorrichtung vorgeschlagen, umfassend

- einen Speicherbaustein zum Speichern eines digitalen Zertifikats;
- ein Netzwerkmodul für die Herstellung einer Verbindung mit einem Netzwerk; und
- einen Prozessor;

dadurch gekennzeichnet, dass
der Prozessor dazu ausgelegt ist,

- eine Verbindung mit einem in dem Netzwerk befindlichen Netzwerk-Computer aufzubauen;
- bei dem Netzwerk-Computer nach einem digitalen Zertifikat anzufragen;
- das digitale Zertifikat von dem Netzwerk-Computer zu empfangen;
- das digitale Zertifikat im Speicherbaustein abzuspeichern;
- eine Verifikation-Anfrage an den Netzwerk-Computer zu senden; und
- mit dem Netzwerk-Computer Nutzerdaten auszutauschen, sofern eine vorherige Verifikation des digitalen Zertifikats des Mikrocontrollers erfolgreich war.

Der erfindungsgemäße Mikrocontroller ermöglicht eine effiziente und sichere Ausstellung und Vergabe eines digitalen Zertifikats. Die Ausstellung und Vergabe des digitalen Zertifikats ist insofern besonders sicher, als der Mikrocontroller-Hersteller keinerlei Informationen über das digitale Zertifikat bzw. über einen etwaigen Authentifizierungsschlüssel verfügt. Somit wird das Risiko minimiert, dass durch einen Hacker-Angriff auf die IT-Systeme des Mikrocontroller-Herstellers sensible Daten, die den Mikrocontroller betreffen, in falsche Hände gelangen. Es wird also der anfängliche Prozess der Vergabe des digitalen Zertifikats vom Mikrocontroller-Hersteller auf den Netzwerk-Computer verlagert. Der Benutzer des Mikrocontrollers kann daher entscheiden, welches Sicherheitssystem im Netzwerk-Computer eingesetzt wird und ist dadurch unabhängig von den Sicherheitsvorkehrungen des Mikrocontroller-Herstellers. Ein weiterer Vorteil des erfindungsgemäßen Mikrocontrollers ist es, dass mehrere Mikrocontroller quasi-zeitgleich mit digitalen Zertifikaten versehen werden können, die alle über denselben Netzwerk-Computer generiert und auf die Mikrocontroller übertragen werden. Somit wird der Aufwand bei der anfänglichen Initiierung bzw. Registrierung der Mikrocontroller gegenüber dem Netzwerk-Computer reduziert und somit eine effiziente Ausstellung der digitalen Zertifikate ermöglicht.

Bei dem Speicherbaustein im Sinne des erfindungsgemäßen Mikrocontrollers kann es sich insbesondere um einen ROM-, einen EPROM-, einen EEPROM- oder einen Flash-Speicher handeln. Das Netzwerkmodul im Sinne des erfindungsgemäßen Mikrocontrollers kann insbesondere als WLAN-Modul oder als eine der vorstehend genannten Netzwerkmodule ausgeführt sein. Als Prozessor kann beispielsweise ein 16-Bit- oder ein 32-Bit- Prozessor des Herstellers Intel oder ARM zum Einsatz kommen.

Nachdem der Mikrocontroller eine Verbindung mit dem Netzwerk-Computer aufgebaut hat und ein digitales Zertifikat von dem Netzwerk-Computer erhalten hat, kann eine sichere Kommunikation zwischen dem Mikrocontroller und dem Netzwerk-Computer erfolgen. Denn diese Kommunikation erfolgt nur dann, wenn zuvor die Verifikation des digitalen Zertifikats des Mikrocontrollers erfolgreich war.

Gemäß einer Ausführungsform des erfindungsgemäßen Mikrocontrollers kann in vorteilhafter Weise vorgesehen sein, dass der Prozessor dazu ausgelegt ist, bei der Initiierung des Mikrocontrollers eine gesicherte Verbindung mit dem Netzwerk-Computer aufzubauen. Bei der gesicherten Verbindung kann insbesondere vorgesehen sein, dass die übertragenen Daten verschlüsselt sind. Durch den Einsatz einer gesicherten Verbindung wird die Sicherheit bei der Ausgabe des digitalen Zertifikats an den Mikrocontroller erhöht. Das Risiko, dass ein Unbefugter bei dem Netzwerk-Computer nach einem digitalen Zertifikat anfragt und dieses auch durch den Netzwerk-Computer erhält, wird durch den Einsatz einer gesicherten Verbindung reduziert.

Bevorzugt kann vorgesehen sein, dass der Prozessor des erfindungsgemäßen Mikrocontrollers dazu ausgelegt ist, die gesicherte Verbindung unter Verwendung des Secure Remote Protokolls, SRP-Protokolls, aufzubauen. Das SRP-Protokoll wird noch im Zusammenhang mit dem erfindungsgemäßen Verfahren näher erläutert.

Weiterhin bevorzugt kann in Ausgestaltung des erfindungsgemäßen Mikrocontrollers vorgesehen sein, dass der Mikrocontroller ein Display zum Anzeigen von Informationen umfasst. Dadurch kann der Prozessor des Mikrocontrollers das Display unmittelbar ansteuern.

Besonders bevorzugt kann vorgesehen sein, dass der Mikrocontroller ein E-INK-Display umfasst. Diese vorteilhafte Ausgestaltung der Erfindung kann beispielsweise als elektronisches Preisschild dienen, das im Einzelhandel eingesetzt wird, um Preise einzelner Produkte einfach und bequem zu aktualisieren. Des Weiteren wird es im Sinne der vorliegenden Erfindung als selbstverständlich angesehen, dass der Prozessor des erfindungsgemäßen Mikrocontrollers auch dazu ausgelegt sein kann, sämtliche im Zusammenhang mit dem erfindungsgemäßen Verfahren offenbarte Schritte auszuüben. Auch wird es als selbstverständlich angesehen, dass der erfindungsgemäße Mikrocontroller sämtliche Merkmale aufweisen kann, die noch im Zusammenhang mit dem Netzwerk-Computer oder dem Kommunikationssystem beschrieben werden.

Ferner wird zur Lösung der vorstehend genannten Aufgabe ein Verfahren für die Kommunikation zwischen einem Mikrocontroller, der einen Prozessor, einen Speicherbaustein und ein Netzwerkmodul aufweist, und einem NetzwerkComputer, der einen Prozessor, einen Speicherbaustein und ein Netzwerkmodul aufweist, vorgeschlagen, wobei das erfindungsgemäße Verfahren die nachfolgenden Schritte umfasst:

- Initiierung des Mikrocontrollers, wobei die Initiierung des Mikrocontrollers folgende Schritte umfasst:

  ◦ Aufbau einer Verbindung zwischen dem Mikrocontroller und dem Netzwerk-Computer;
  ◦ Anfrage des Mikrocontrollers gegenüber dem Netzwerk-Computer nach einem digitalen Zertifikat;
  ◦ Ausstellung eines digitalen Zertifikats durch den Netzwerk-Computer;
  ◦ Übermittlung des digitalen Zertifikats von dem Netzwerk-Computer an den Mikrocontroller; und
  ◦ Speichern des digitalen Zertifikats im Speicherbaustein des Mikrocontrollers; sowie

- Austausch von Nutzerdaten zwischen dem Mikrocontroller und dem Netzwerk-Computer, wobei der Austausch der Nutzerdaten folgende Schritte umfasst:

  ◦ Aufbau einer Verbindung zwischen dem Mikrocontroller und dem Netzwerk-Computer;
  ◦ Verifikation des digitalen Zertifikats des Mikrocontrollers durch den Netzwerk-Computer; und
  o Austausch der Nutzerdaten zwischen dem Mikrocontroller und dem Netzwerk-Computer, sofern die vorausgegangene Verifikation des digitalen Zertifikats des Mikrocontrollers durch den Netzwerk-Computer erfolgreich war.

Der vorstehend genannte Schritt der Initiierung des Mikrocontrollers umfasst sämtliche Schritte, die durchlaufen werden, bis der Mikrocontroller ein digitales Zertifikat erhält. Dieser Schritt kann auch als anfängliche Registrierung eines Mikrocontrollers in einem Netzwerk verstanden werden. Sobald dieser Schritt abgeschlossen ist, ist der Mikrocontroller bereit für die Kommunikation mit dem Netzwerk-Computer.

Durch das erfindungsgemäße Verfahren wird es ermöglicht, den Mikrocontroller mit einem digitalen Zertifikat zu versehen, ohne dass sensible Daten, die der Identifizierung des Mikrocontrollers im Netzwerk dienen, beim Mikrocontroller-Hersteller gespeichert werden. Die Ausstellung des digitalen Zertifikats erfolgt ausschließlich auf dem Netzwerk-Computer. Dadurch erhält der Benutzer eines Netzwerks die vollständige Kontrolle über die Ausstellung digitaler Zertifikate sowie über etwaige weitere Vorkehrungen zum sicheren Speichern der sensiblen Daten, insbesondere des digitalen Zertifikats oder eines digitalen Authentifizierungsschlüssels.

Nach der erfolgreichen Registrierung des Mikrocontrollers im Netzwerk kann ein sicherer Austausch von Nutzerdaten zwischen dem Mikrocontroller und dem Netzwerk-Computer erfolgen, da die Verifikation des digitalen Zertifikats des Mikrocontrollers gewährleistet, dass Nutzerdaten nur dann ausgetauscht werden, wenn der Mikrocontroller auch das korrekte digitale Zertifikat besitzt. Dadurch wird das Risiko minimiert, dass Unberechtigte, die nicht über das entsprechende digitale Zertifikat verfügen, mit dem Netzwerk-Computer Nutzerdaten austauschen können.

Gemäß einer vorteilhaften Ausführung des erfindungsgemäßen Verfahrens kann vorgesehen sein, dass ein digitaler Authentifizierungsschlüssel, der für den Aufbau einer Verbindung zwischen dem Mikrocontroller und dem Netzwerk-Computer während des Initiierungsvorgangs notwendig sein kann, durch den Mikrocontroller selbständig generiert wird, ohne dass nachträgliches Auslesen des Authentifizierungsschlüssels bzw. seine Extraktion notwendig oder gewünscht wird. Die Generierung des Authentifizierungsschlüssels kann beispielsweise durch ein Verfahren zur Generierung einer Zufallszahl oder eines Zufallszeichens erfolgen. Dadurch wird insbesondere sichergestellt, dass der Authentifizierungsschlüssel niemals im Besitz des Mikrocontroller-Herstellers oder eines anderen Außenstehenden gelangt und dass gemäß dem Zufallsprinzip das vorherige oder nachträgliche Erraten des Authentifizierungsschlüssels entweder ganz oder in Teilen erheblich erschwert wird.

Weiterhin bevorzugt kann in Ausgestaltung des erfindungsgemäßen Verfahrens vorgesehen sein, dass beim Aufbau einer Verbindung zwischen dem Mikrocontroller und dem Netzwerk-Computer während der Initiierung des Mikrocontrollers eine gesicherte Verbindung hergestellt wird. Wie bereits im Zusammenhang mit dem erfindungsgemäßen Mikrocontroller ausgeführt, wird durch den Einsatz einer gesicherten Verbindung das Risiko eines unbefugten Abfangens des digitalen Zertifikats bei der Ausgabe an den Mikrocontroller reduziert wird. Bei der gesicherten Verbindung werden die ausgetauschten Informationen, beispielsweise ein Authentifizierungsschlüssel, der für die anfängliche Initiierung des Mikrocontrollers eingesetzt wird (nachfolgend auch als "erster Authentifizierungsschlüssel" bezeichnet), verschlüsselt übertragen. Für die Verschlüsselung können sowohl symmetrische als auch asymmetrische Verschlüsselungsverfahren zum Einsatz kommen. Bei der symmetrischen Verschlüsselung wird für die Verschlüsselung und für die Entschlüsselung jeweils derselbe Schlüssel verwendet. Bei asymmetrischen Verschlüsselungsverfahren wird ein Schlüsselpaar erzeugt, das aus einem privaten und einem öffentlichen Schlüssel besteht. Asymmetrische Verschlüsselungsverfahren bieten im Allgemeinen weitreichendere Sicherheit als symmetrische Verschlüsselungsverfahren, da sie im Gegensatz zu den symmetrischen Verfahren nicht auf das zeitgleiche Vorhandensein des deshalb so genannten symmetrischen geheimen Schlüssels an beiden Enden einer zu sichernden Kommunikationsverbindung angewiesen sind. Jedoch sind sie in der Regel mit einem höheren Rechenaufwand verbunden. Gemäß dem erfindungsgemäßen Verfahren kann vorgesehen sein, dass ein Authentifizierungsschlüssel zwischen dem Mikrocontroller und dem Netzwerk-Computer verschlüsselt übertragen wird. Erst wenn der Authentifizierungsschlüssel des Mikrocontrollers geprüft und die Identität des Mikrocontrollers durch den Netzwerk-Computer verifiziert werden konnte, wird der Netzwerk-Computer ein digitales Zertifikat ausstellen und an den Mikrocontroller übermitteln. Somit wird gewährleistet, dass kein Unbefugter in den Besitz des Authentifizierungsschlüssels gelangt.

Gemäß einer weiteren bevorzugten Ausführungsform des erfindungsgemäßen Verfahrens kann vorgesehen sein, dass bei der Initiierung des Mikrocontrollers ein Zero-Knowledge-Verfahren zum Einsatz kommt. Das Zero-Knowledge-Verfahren ist ein aus der Kryptographie bekanntes Verfahren. Die Grundidee dieses Verfahrens liegt darin, dass ein erster Kommunikationspartner einen zweiten Kommunikationspartner davon überzeugen kann, dass er im Besitz eines Geheimnisses (beispielsweise eines Schlüssels) ist, ohne dieses Geheimnis preiszugeben. Im Zusammenhang mit dem Zero-Knowledge-Verfahren spricht man üblicherweise von einem Beweisführer (erster Kommunikationspartner, auch "prover" genannt) und einem Prüfer (zweiter Kommunikationspartner, auch "verifier" oder Verifizierender genannt). Der Beweisführer ist dabei üblicherweise im Besitz eines Geheimnisses und möchte den Prüfer von dem Besitz des Geheimnisses überzeugen. Der Prüfer stellt dem Beweisführer mehrere Fragen, um herauszufinden, ob dieser tatsächlich im Besitz des Geheimnisses ist. Wenn der Beweisführer die gestellten Fragen korrekt beantwortet, kann der Prüfer mit einer relativ hohen Wahrscheinlichkeit davon ausgehen, dass der Beweisführer auch tatsächlich im Besitz des Geheimnisses ist. Bei dem Geheimnis handelt es sich im Zusammenhang mit der vorliegenden Erfindung insbesondere um einen ersten Authentifizierungsschlüssel, mit dem der Mikrocontroller während des Initiierungsvorganges seine Identität gegenüber dem Netzwerk-Computer nachweisen kann. Der Vorteil des Einsatzes des Zero-Knowledge-Verfahrens bei dem erfindungsgemäßen Verfahren ist, dass der erste Authentifizierungsschlüssel selbst nicht über den Kommunikationskanal übertragen werden muss. Gemäß einer Ausführungsform kann es vorgesehen sein, dass lediglich ein Verifizierungsparameter (im Englischen ebenfalls als "verifier" bezeichnet), der dazu eingesetzt werden kann, den Authentifizierungsschlüssel des Mikrocontrollers zu verifizieren, separat an den Netzwerk-Computer übertragen wird. Beispielsweise kann vorgesehen sein, dass der Verifikationsparameter des Mikrocontrollers durch den Benutzer bzw. den Beweisführer per E-Mail an den Netzwerk-Computer gesendet wird. Auch kann vorgesehen sein, dass mehrere Verifikationsparameter zahlreicher Mikrocontroller gleichzeitig per E-Mail an den Netzwerk-Computer gesendet werden. Es ist allerdings an dieser Stelle zu beachten, dass es sich hierbei bevorzugt um eine sichere Form der E-Mail-Kommunikation handeln soll wie etwa im Fall von PGP oder S/MIME. Weiterhin bevorzugt kann in Ausgestaltung des erfindungsgemäßen Verfahrens vorgesehen sein, dass einer oder mehrere Verifikationsparameter mit Hilfe einer abgesicherten zentralen Web-Anwendung hochgeladen werden.

Ferner kann gemäß einer vorteilhaften Ausführungsform des erfindungsgemäßen Verfahrens vorgesehen sein, dass der Schritt der Initiierung des Mikrocontrollers die folgenden Schritte umfasst:

- Generierung eines ersten Authentifizierungsschlüssels;
- Aufbau einer Verbindung zwischen dem Mikrocontroller und dem Netzwerk-Computer;
- Anfrage des Mikrocontrollers gegenüber dem Netzwerk-Computer nach einem digitalen Zertifikat;
- Verifikation der Identität des Mikrocontrollers durch Prüfung des ersten Authentifizierungsschlüssels und Verwendung eines Zero-Knowledge-Verfahrens;

- Ausstellung eines digitalen Zertifikats, umfassend einen zweiten Authentifizierungsschlüssel, durch den Netzwerk-Computer und Übermittlung des digitalen Zertifikats von dem Netzwerk-Computer an den Mikrocontroller, sofern die vorherige Verifikation der Identität des Mikrocontrollers erfolgreich war; und
- Speichern des digitalen Zertifikats im Speicherbaustein des Mikrocontrollers.

Dabei kann die Erstellung des ersten und des zweiten Authentifizierungsschlüssels bevorzugt durch ein Zufallsprinzip erfolgen.

Zur weiteren Ausgestaltung des erfindungsgemäßen Verfahrens kann vorgesehen sein, dass beim Zero-Knowledge-Verfahren ein Password-Authenticated-Key-Agreement-Verfahren, auch bekannt als PAKE-Verfahren, verwendet wird. Das PAKE-Verfahren stellt eine Untergruppe der Zero-Knowledge-Verfahren dar. Das PAKE-Verfahren ist in der Kryptographie bekannt und ermöglicht es mehreren Kommunikationspartnern, auf Grundlage eines bei einem der Kommunikationspartner vorhandenen Schlüssels kryptographische Schlüssel für die sichere Kommunikation zu erstellen. Eine unbefugte Person, die den Kommunikationskanal zwischen den Kommunikationspartnern unbefugt abhört, kann die zwischen den Kombinationspartner verschlüsselt ausgetauschten Informationen nicht entschlüsseln.

Gemäß einer besonders bevorzugten Ausführungsform des erfindungsgemäßen Verfahrens kann ferner vorgesehen sein, dass bei der Initiierung des Mikrocontrollers das Secure Remote Password Protokoll, auch bekannt als SRP-Protokoll, verwendet wird.

Das SRP-Protokoll (nachfolgend auch als das SRP-Verfahren bezeichnet) ist ein aus der Kryptographie bekanntes Verfahren, das zur Passwort-Authentifizierung genutzt wird. Auch wenn das SRP-Verfahren in verschiedenen Versionen bekannt ist, insbesondere in den Versionen 3, 6 und 6a, ist das Grundprinzip bei allen Versionen identisch. Sämtliche der vorstehend genannten Versionen des SRP-Protokolls sind für das vorliegende erfindungsgemäße Verfahren geeignet. Ein großer Vorteil der Verwendung des SRP-Protokolls ist, dass keine dritte Partei, welche als vertrauenswürdige Zertifizierungsstelle tätig sein muss, notwendig ist, um die Identität einer Partei zu verifizieren. Im Zusammenhang mit dem erfindungsgemäßen Verfahren kann insbesondere vorgesehen sein, dass der Mikrocontroller zunächst einen Benutzernamen, einen ersten Authentifizierungsschlüssel, der während der Initiierung des Mikrocontrollers verwendet wird, einen Salt (zufällig gewählte Zeichenfolge) und einen Verifikationsparameter (im Englischen ebenfalls als "verifier" bezeichnet) generiert. Der Benutzername, der Salt sowie der Verifikationsparameter werden anschließend an den Netzwerk-Computer übermittelt. Der Netzwerk-Computer kann dann mittels der ihm übermittelten Informationen gemäß dem SRP-Protokoll die Authentizität des Mikrocontrollers verifizieren. Ist die Verifikation erfolgreich, so kann der Netzwerk-Computer ein digitales Zertifikat für den Mikrocontroller ausstellen und an diesen übertragen. Das digitale Zertifikat, das anschließend beim Datenaustausch zwischen dem Mikrocontroller und dem Netzwerk-Computer verwendet wird, kann insbesondere einen zweiten Authentifizierungsschlüssel umfassen, der sich vom ersten Authentifizierungsschlüssel unterscheidet. Während der erste Authentifizierungsschlüssel während des Vorgangs der Initiierung des Mikrocontrollers eingesetzt wird, kann der zweite Authentifizierungsschlüssel während des Vorgangs des Austauschs von Daten zwischen dem Mikrocontroller und dem Netzwerk-Computer eingesetzt werden.

Auch kann gemäß einer weiteren vorteilhaften Ausführungsform des erfindungsgemäßen Verfahrens vorgesehen sein, dass der Schritt der Initiierung des Mikrocontrollers die folgenden Schritte umfasst:

- Generierung eines ersten Authentifizierungsschlüssels;
- Aufbau einer Verbindung zwischen dem Mikrocontroller und dem Netzwerk-Computer;
- Anfrage des Mikrocontrollers gegenüber dem Netzwerk-Computer nach einem digitalen Zertifikat;
- Verifikation der Identität des Mikrocontrollers durch Prüfung des ersten Authentifizierungsschlüssels und Verwendung des SRP-Verfahrens;
- Ausstellung eines digitalen Zertifikats, umfassend einen zweiten Authentifizierungsschlüssel, durch den Netzwerk-Computer und Übermittlung des digitalen Zertifikats von dem Netzwerk-Computer an den Mikrocontroller, sofern die vorherige Verifikation der Identität des Mikrocontrollers erfolgreich war; und
- Speichern des digitalen Zertifikats im Speicherbaustein des Mikrocontrollers.

Weiterhin kann gemäß einer Ausführungsform des erfindungsgemäßen Verfahrens vorgesehen sein, dass bei dem der Initiierung nachgeschalteten Schritt des Austauschs von Nutzerdaten zwischen dem Mikrocontroller und dem Netzwerk-Computer ein verschlüsselter Austausch unter Verwendung des Transport Layer Security Protokolls, auch bekannt als TLS-Protokoll, erfolgt. Der Einsatz des TLS-Protokolls ermöglicht eine erhöhte Sicherheit bei der Kommunikation zwischen dem Mikrocontroller und dem Netzwerk-Computer.

Gemäß einer weiteren bevorzugten Ausführungsform des erfindungsgemäßen Verfahrens kann vorgesehen sein, dass bei dem TLS-Protokoll ein zweiseitiges TLS-Protokoll verwendet wird, bei dem sowohl das digitale Zertifikat des Mikrocontrollers durch den Netzwerk-Computer verifiziert wird, als auch das digitale Zertifikat des Netzwerk-Computers durch den Mikrocontroller verifiziert wird. Durch die beidseitige Verifikation der entsprechenden digitalen Zertifikate kann die Sicherheit bei der Kommunikation zwischen dem Mikrocontroller und dem Netzwerk-Computer weiter erhöht werden.

In einer weiteren Ausführungsform des erfindungsgemäßen Verfahrens kann ferner vorgesehen sein, dass bei der Initiierung des Mikrocontrollers zusätzlich eine Firmware von dem Netzwerk-Computer an den Mikrocontroller übertragen und auf dem Mikrocontroller installiert wird. Dadurch kann eine besonders effiziente und quasi-zeitgleiche Auslieferung von anwendungsspezifischen Firmwares erfolgen. Auch kann durch die simultane Ausgabe des digitalen Zertifikats und der Firmware an den Mikrocontroller erreicht werden, dass die Einrichtung eines Mikrocontrollers innerhalb kürzester Zeit erfolgen kann. Dies ist insbesondere dann vorteilhaft, wenn zahlreiche Mikrocontroller zeitgleich einzurichten sind. Auf diese Weise kann der notwendige Zeitaufwand sowie der Kostenaufwand für die Inbetriebnahme zahlreicher Mikrocontroller in einem Netzwerk signifikant reduziert werden.

Es wird vorliegend als selbstverständlich angesehen, dass das erfindungsgemäße Verfahren auch mit sämtlichen Merkmalen kombinierbar ist, die vorliegend im Zusammenhang mit dem erfindungsgemäßen Mikrocontroller, dem Netzwerk-Computer oder dem Kommunikationssystem beschrieben sind.

Ferner wird zur Lösung der vorstehend genannten Aufgabe ein Netzwerk-Computer mit einem Prozessor, einem Speicherbaustein und einem Netzwerk-modul vorgeschlagen, wobei der Prozessor dazu ausgelegt ist,

- eine Verbindung mit einem Mikrocontroller aufzubauen;
- ein digitales Zertifikat auszustellen;
- das digitale Zertifikat an den Mikrocontroller zu übermitteln;
- das digitale Zertifikat des Mikrocontrollers zu verifizieren; und
- mit dem Mikrocontroller Nutzerdaten auszutauschen, sofern die vorherige Verifikation des digitalen Zertifikats des Mikrocontrollers erfolgreich war.

Durch den erfindungsgemäßen Netzwerk-Computer kann eine besonders effiziente und sichere Ausstellung digitaler Zertifikate für Mikrocontroller erreicht werden.

Gemäß einer Ausführungsform des erfindungsgemäßen Netzwerk-Computers kann ein zusätzliches Hochsicherheits-Modul (auch bekannt als Hardware Security Modul - HSM) zur Speicherung eines Authentifizierungsschlüssels vorgesehen sein. Hochsicherheits-Module sind in der Kryptographie bekannt und ermöglichen effiziente und sichere Ausführung kryptographischer Operation. Durch die Verwendung eines Hochsicherheit-Moduls können daher die sensiblen Schlüssel in einem separaten, geschützten Speicher hinterlegt werden. Dadurch wird die Sicherheit bei der Kommunikation zwischen dem Mikrocontroller und dem Netzwerk-Computer weiter erhöht.

Es wird vorliegend als selbstverständlich angesehen, dass der erfindungsgemäße Netzwerk-Computer auch mit sämtlichen Merkmalen kombinierbar ist, die im Zusammenhang mit dem erfindungsgemäßen Mikrocontroller, dem erfindungsgemäßen Verfahren oder dem Kommunikationssystem beschrieben sind.

Schließlich wird zur Lösung der vorstehend genannten Aufgabe ein Kommunikationssystem vorgeschlagen, umfassend den vorstehend beschriebenen, erfindungsgemäßen Mikrocontroller und den vorstehend beschriebenen, erfindungsgemäßen Netzwerk-Computer. Auch wird es vorliegend als selbstständig angesehen, dass das erfindungsgemäße Kommunikationssystem sämtliche Merkmale aufweisen kann, die im Zusammenhang mit dem erfindungsgemäßen Mikrocontroller, dem erfindungsgemäßen Verfahren oder dem Netzwerk-Computer beschrieben sind.

Die Erfindung wird nachfolgend anhand von Ausführungsbeispielen und unter Bezugnahme auf die Zeichnungen näher erläutert. Im Einzelnen zeigen dabei:

Fig. 1     eine Prinzipdarstellung einer Ausführungsform des erfindungsgemäßen Mikrocontrollers und des Netzwerk-Computers,

Fig. 2     eine Prinzipdarstellung einer weiteren Ausführungsform des erfindungsgemäßen Mikrocontrollers umfassend ein Display,

Fig. 3     eine Prinzipdarstellung einer weiteren Ausführungsform der Erfindung umfassend mehrere erfindungsgemäße Mikrocontroller,

Fig. 4     ein Flussdiagramm zur Darstellung der übergeordneten Schritte des erfindungsgemäßen Verfahrens,

Fig. 5     ein weiteres Flussdiagramm zur Darstellung der einzelnen Schritte der Initiierung des Mikrocontrollers,

Fig. 6     ein weiteres Flussdiagramm zur Darstellung der einzelnen Schritte des Austauschs von Nutzerdaten zwischen dem Mikrocontroller und dem Netzwerk-Computer,

Fig. 7     abgefangenen Azure IoT-Datenverkehr,

Fig. 8    Mehrparteien IoT-PKI- Lösung mit symbiotischer Sicherheit und

Fig. 9    Bausteine einer Hardware Crypto Engine.

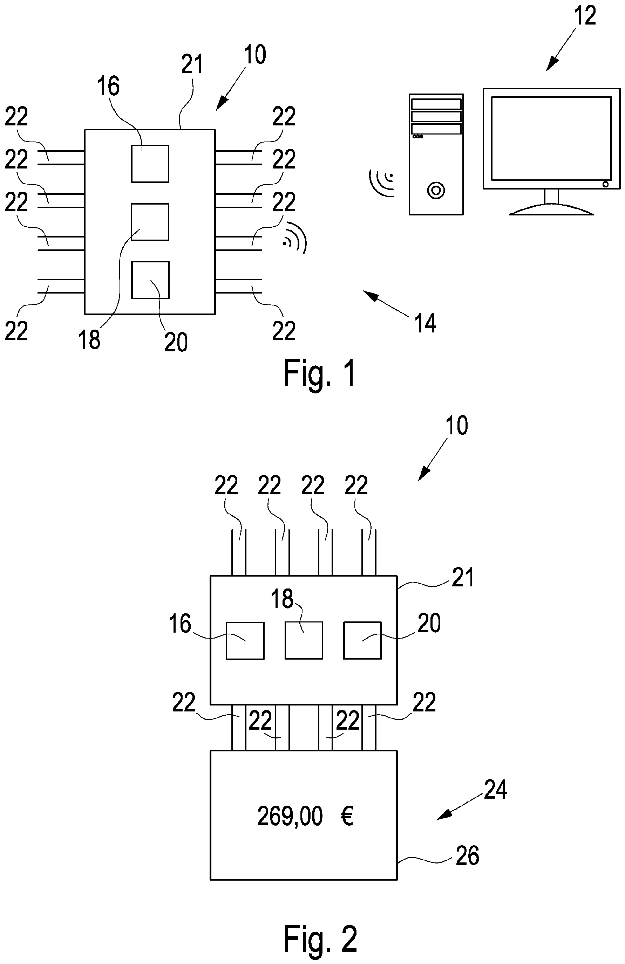

In der Fig. 1 ist eine Ausführungsform des erfindungsgemäßen Mikrocontrollers 10 schematisch dargestellt. Der Mikrocontroller 10 ist dazu ausgelegt, mit dem erfindungsgemäßen Netzwerk-Computer 12 zu kommunizieren. Insbesondere kann vorgesehen sein, dass der Netzwerkcomputer 12 Steuerbefehle an den Mikrocontroller 10 senden kann. Der Mikrocontroller 10 und der Netzwerk-Computer 12 bilden gemeinsam das erfindungsgemäße Kommunikationssystem 14.

Der Mikrocontroller 10 verfügt über einen Speicherbaustein 16 zum Speichern eines digitalen Zertifikats. Der Speicherbaustein 16 kann insbesondere als Flash- oder EEPROM-Speicher ausgeführt sein. Zudem verfügt der Mikrocontroller 10 über ein Netzwerkmodul 18 für die Herstellung einer Verbindung mit einem Netzwerk. Das Netzwerkmodul 18 kann insbesondere als WLAN-Modul ausgeführt sein. Zudem weist der Mikrocontroller 10 einen Prozessor 20 auf. Der Prozessor 20 ist dazu ausgelegt, eine Verbindung mit dem Netzwerk-Computer 12 aufzubauen, bei dem Netzwerk-Computer 12 nach einem digitalen Zertifikat anzufragen, das digitale Zertifikat zu empfangen und im Speicherbaustein 16 abzuspeichern und mit dem Netzwerk-Computer 12 Daten auszutauschen, sofern eine vorherige Verifikation des digitalen Zertifikats des Mikrocontrollers 10 erfolgreich war. Der Speicherbaustein 16, das Netzwerkmodul 18 und der Prozessor 20 sind in einem Mikrocontrollergehäuse 21 angeordnet. Ferner weist der Mikrocontroller 10 Verbindungsleitungen 22 auf, die dazu dienen, den Mikrocontroller 10 mit einer Leiterplatine und/oder mit weiteren Komponenten zu verbinden. Auch der Netzwerk-Computer 12 weist einen Speicherbaustein, ein Netzwerkmodul und einen Prozessor auf, die jedoch in der Fig. 1 nicht gesondert dargestellt sind.

In der Fig. 2 ist eine weitere Ausführungsform des erfindungsgemäßen Mikrocontrollers 10 dargestellt. Gemäß der in dieser Figur dargestellten Ausführungsform weist der Mikrocontroller 10 ein Display 24 auf. Das Display 24 ist in diesem Ausführungsbeispiel als E-Ink-Display 26 ausgeführt. Dabei ist das Mikrocontrollergehäuse 21 mittels der Verbindungsleitungen 22 mit dem Display 24 verbunden. Der in diesem Ausführungsbeispiel gezeigte Mikrocontroller 10 kann zum Anzeigen von Preisen in einem Kaufhaus genutzt werden. Über die Verbindung des Mikrocontrollers 10 mit einem Netzwerkcomputer 12 kann der Preis einer Ware einfach und bequem aktualisiert werden, ohne dass ein Mitarbeiter ein Preisschild austauschen muss.

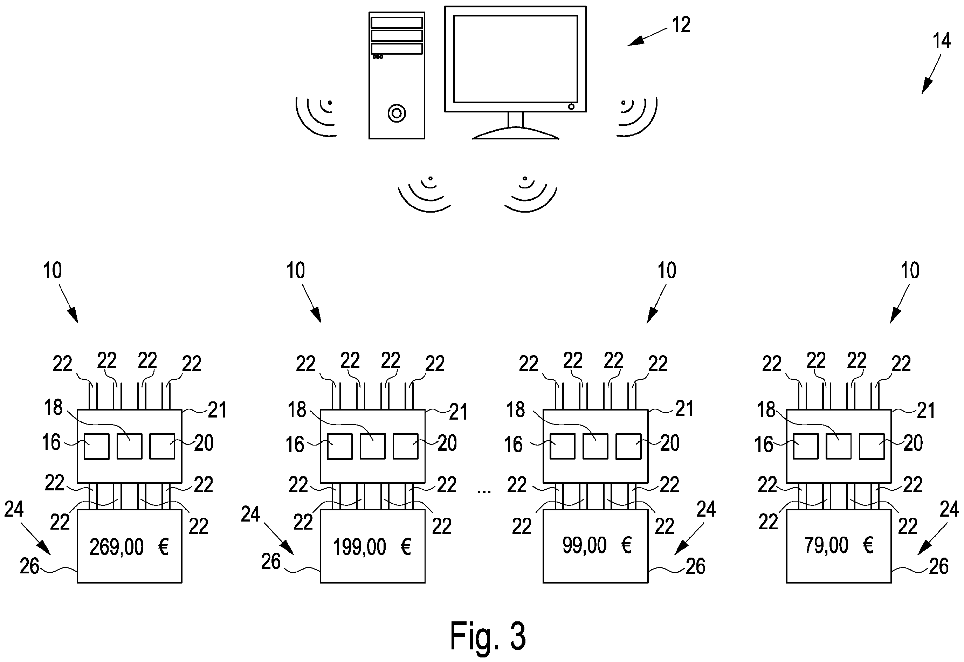

In der Fig. 3 sind mehrere Mikrocontroller 10 dargestellt, die jeweils mit einem Display 24 ausgestattet sind. Sämtliche der Mikrocontroller 10 sind mit einem Netzwerk-Computer 12 verbunden der Netzwerk-Computer 12 kann daher sämtliche auf den Displays 24 angezeigten Preise zentral verwalten und diese bei Bedarf aktualisieren. Auf diese Weise können beispielsweise sämtliche Preisschilder in einem Kaufhaus über ein und denselben Netzwerk-Computer 12 gesteuert werden. Dadurch wird eine effiziente Ansteuerung zahlreicher elektronischer Preisschilder in einem Kaufhaus gewährleistet.

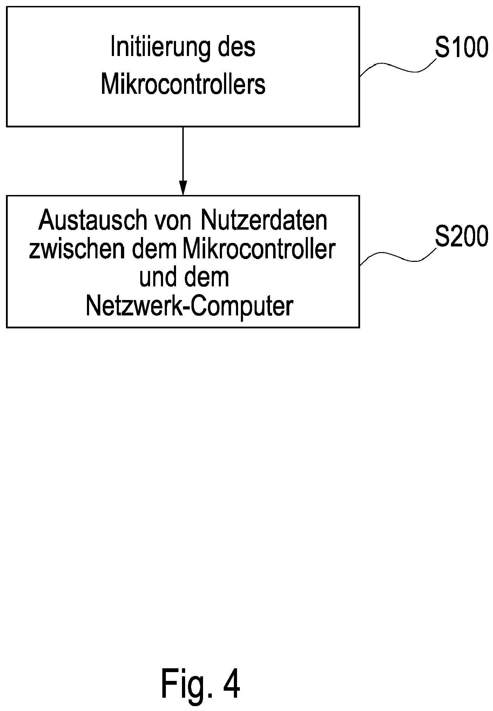

Weiterhin ist in der Fig. 4 eine Übersicht zu den übergeordneten Verfahrensschritten der Initiierung S100 des Mikrocontrollers sowie des anschließenden Austauschs von Nutzerdaten S200 abgebildet. Gemäß dem erfindungsgemäßen Verfahren wird zunächst in einem ersten Schritt der Mikrocontroller für die Kommunikation mit dem Netzwerk-Computer 12 vorbereitet. Diese Vorbereitung läuft innerhalb des Initiierungsschrittes S100 ab. Nachdem die Initiierung S100 abgeschlossen ist, ist der Mikrocontroller 10 für die Kommunikation mit dem Netzwerk-Computer 12 vorbereitet, sodass der Austausch S200 von Nutzerdaten zwischen dem Mikrocontroller 10 und dem Netzwerk-Computer 12 erfolgen kann.

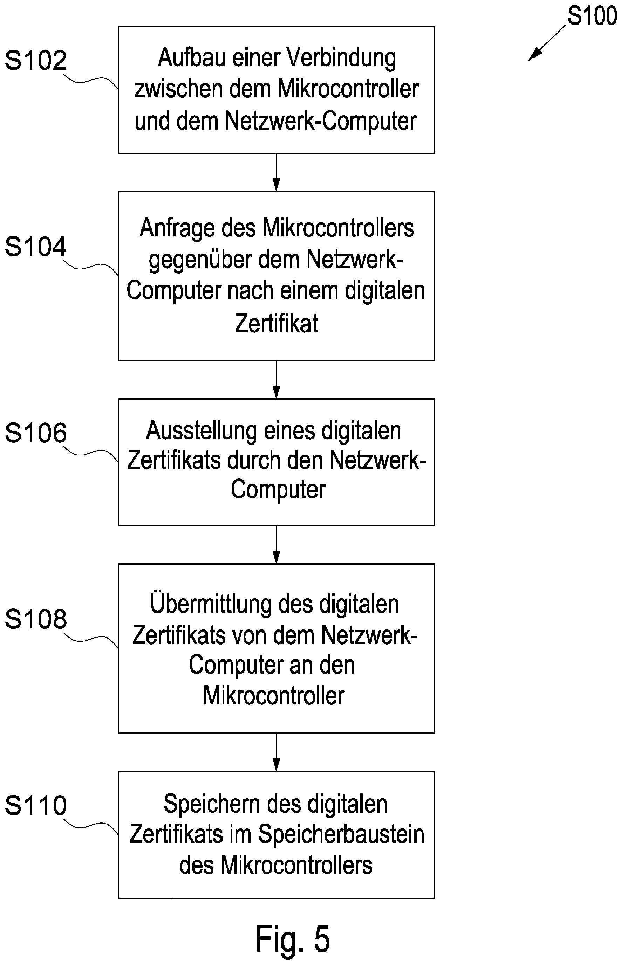

In der Fig. 5 sind die einzelnen Schritte der Initiierung S100 dargestellt. Zunächst wird eine Verbindung zwischen dem Mikrocontroller 10 und dem Netzwerk-Computer 12 aufgebaut (Schritt S102). Dabei kann bevorzugt eine gesicherte Verbindung zwischen dem Mikrocontroller 10 und dem Netzwerk-Computer 12 aufgebaut werden. Anschließend fragt der Mikrocontroller beim Netzwerk-Computer 12 nach einem digitalen Zertifikat an (Schritt S104). Gemäß einer bevorzugten Ausführungsform der Erfindung kann vorgesehen sein, dass der Netzwerk-Computer 12 zunächst die Identität des Mikrocontrollers 10 verifiziert. Dies kann beispielsweise über die Abfrage eines Authentifizierungsschlüssels erfolgen. Anschließend kann der Netzwerk-Computer 12, unter der Voraussetzung einer erfolgreichen Authentifizierung des Mikrocontrollers 10, ein digitales Zertifikat für den Mikrocontroller 10 ausstellen (Schritt S106). Das vom Netzwerk-Computer 12 generierte digitale Zertifikat wird anschließend an den Mikrocontroller 10 übermittelt (Schritt S108). Schließlich wird das digitale Zertifikat im Speicherbaustein 16 des Mikrocontrollers 10 abgespeichert (Schritt 110).

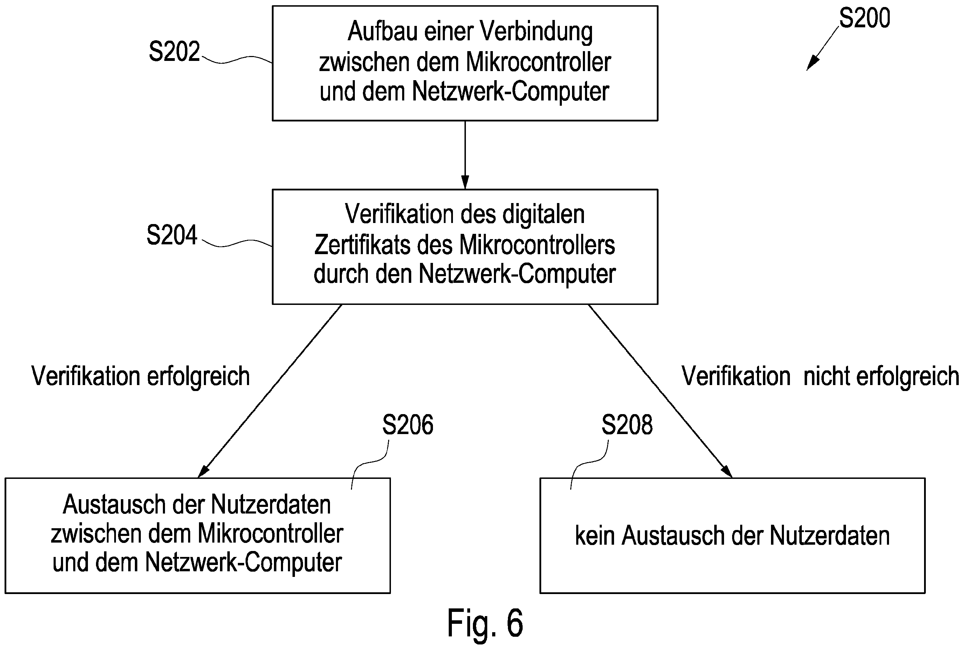

In der Fig. 6 sind die einzelnen Schritte des Datenaustauschs S200 dargestellt. In einem ersten Schritt wird eine Verbindung zwischen dem Mikrocontroller 10 und dem Netzwerk-Computer 12 aufgebaut (Schritt S202). Anschließend verifiziert der Netzwerk-Computer 12 das digitale Zertifikat des Mikrocontrollers 10 (Schritt S204). Ist diese Verifikation erfolgreich, so wird der Austausch der Nutzerdaten zwischen dem Mikrocontroller 10 und dem Netzwerk-Computer 12 erlaubt (Schritt S206) sofern die Verifikation nicht erfolgreich war, wird der Austausch von Daten zwischen dem Mikrocontroller 10 und dem Netzwerk-Computer 12 verweigert (Schritt S208). Zudem kann vorgesehen sein, dass nicht nur der Netzwerk Computer 12 das digitale Zertifikat des Mikrocontrollers 10 verifiziert, sondern auch das der Mikrocontroller 10 das digitale Zertifikat des Netzwerk-Computers 12 verifiziert. Auf diese Weise kann gewährleistet werden, dass der Austausch lediglich zwischen zwei berechtigten Parteien erfolgen kann.

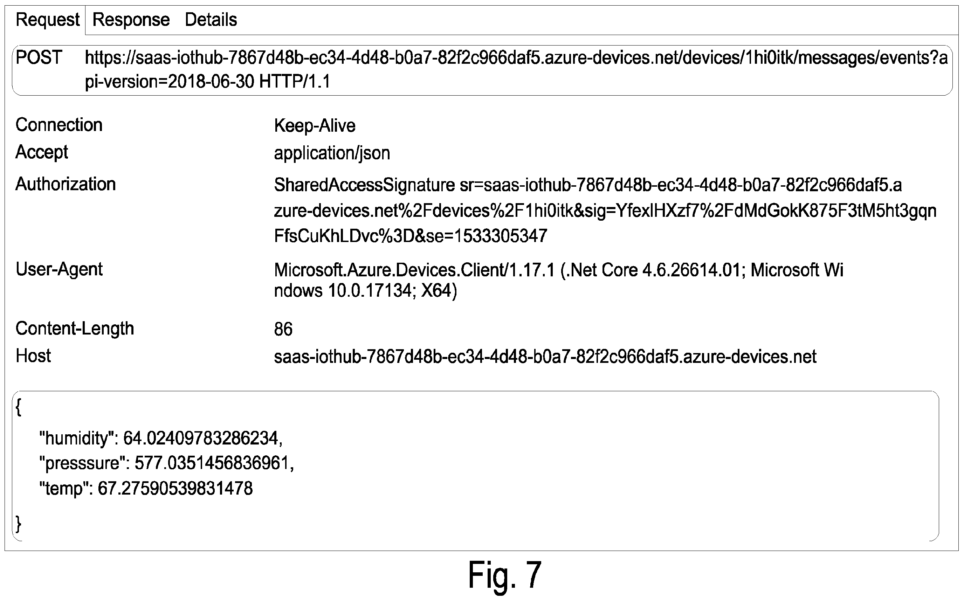

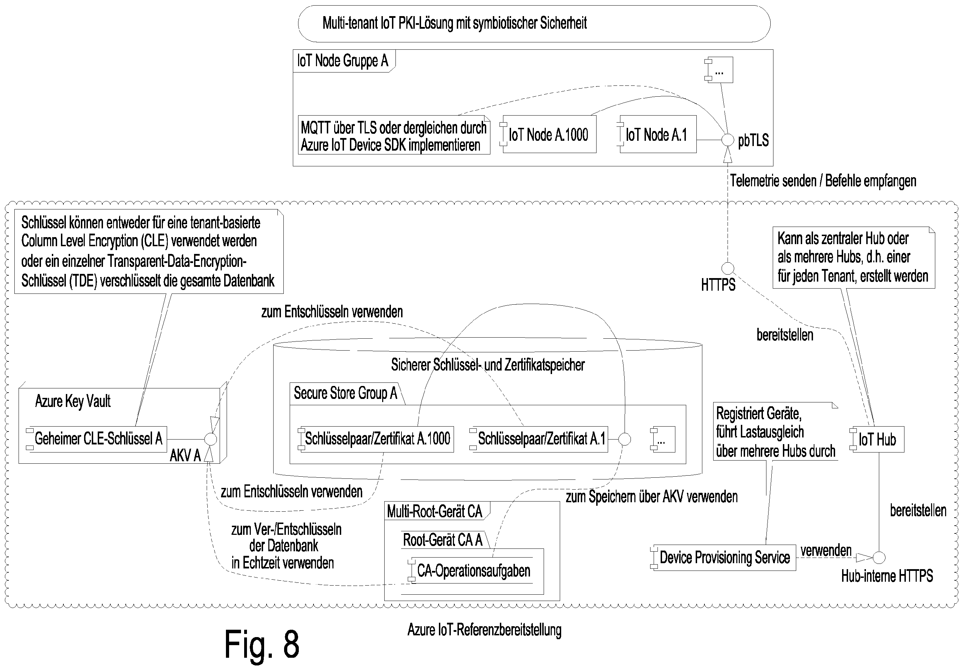

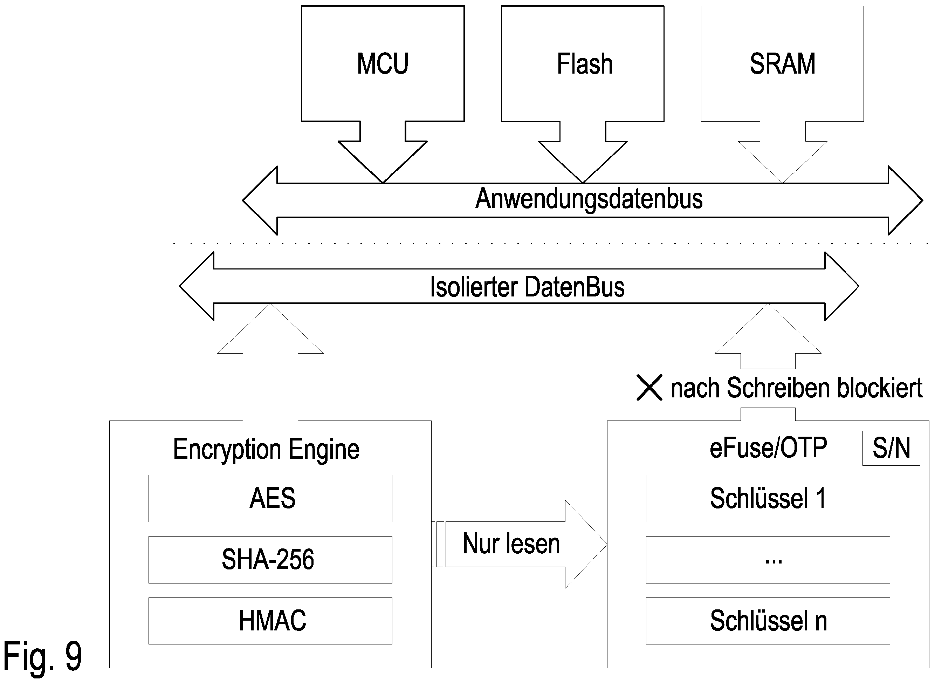

In der Fig. 7 sind ein abgefangener Azure Datenverkehr, in der Fig. 8 eine Mehrparteien (Multi-tenant) IoT PKI Lösung mit symbiotischer Sicherheit (Symbiotic Security) und in der Fig. 9 Bausteine einer Hardware-Krypto-Engine gezeigt. Auf die Figuren 7 bis 9 wird im Zusammenhang mit der nachfolgenden, alternativen Beschreibung der weiteren erfindungsgemäßen Aspekte eingegangen.

**Bezugszeichenliste**

| | |
|---|---|
| 10 | Mikrocontroller |
| 12 | Netzwerk-Computer |
| 14 | Kommunikationssystem |
| 16 | Speicherbaustein |
| 18 | Netzwerkmodul |
| 20 | Prozessor |
| 21 | Mikrocontrollergehäuse |
| 22 | Verbindungsleitung |
| 24 | Display |
| 26 | E-Ink-Display |
| S100 | Verfahrensschritt der Initiierung des Mikrocontrollers |
| S200 | Verfahrensschritt des Austauschs von Nutzerdaten |
| S102 | Verfahrensschritt des ersten Verbindungsaufbaus |
| S104 | Verfahrensschritt der Zertifikatsanfrage |
| S106 | Verfahrensschritt der Zertifikatsausstellung |
| S108 | Verfahrensschritt der Zertifikatsübermittlung |
| S110 | Verfahrensschritt der Zertifikatsspeicherung |
| S202 | Verfahrensschritt des zweiten Verbindungsaufbaus |
| S204 | Verfahrensschritt der Zertifikatsverifikation |
| S206 | Verfahrensschritt des Datenaustauschs |
| S208 | Verfahrensschritt des verweigerten Datenaustauschs |

Zur Verdeutlichung weiterer Aspekte der vorliegenden Erfindung wird die Erfindung durch die nachfolgende, alternative Beschreibung erläutert.

**Referenzarchitektur für die Erstanmeldung von IoT-Geräten und fallspezifischer bzw. einsatzabhängiger Firmwarekopplung mit symbiotischer Sicherheit (Symbiotic Security)**

Zusammenfassung - Wie zuvor dargelegt, verbindet symbiotische Sicherheit alle wesentlichen Komponenten und Entitäten der "Factory of Tomorrow (Fabrik von morgen)" zu einer Einheit der Koexistenz, bei welcher eingebettete Geräte oder IoT (Internet of Things/Internet der Dinge) nicht nur auf Zwischeneinrichtungen wie Gateways angewiesen sind, um ein ausreichendes Maß an Architektursicherheit zu gewährleisten, sondern vielmehr denselben hohen Standard mit Hilfe von starker Kryptographie (beispielsweise Transport Layer Security oder TLS) implementieren, um dessen durchgehende Verwendung über die gesamte Plattform, bestehend aus dem Internet of Things (Internet der Dinge) und dem Internet of Services (Internet der Dienste), zu unterstützen. Letzteres ist in seiner entfernten und dezentralen Form des Cloud-Computing besser bekannt und verstanden, bei welchem in hohem Maße verfügbare und skalierbare Ressourcen zusammengeführt werden, um die eingehende Telemetrie oder, einfach ausgedrückt, eine große Menge an Rohdaten zu verarbeiten, die heute allgemein auch als "Big Data" bezeichnet wird. Vor der Bildung dieser festen Allianz der symbiotischen Sicherheit, müssen IoT-Geräte zu deren zielspezifischen Standorten (beispielsweise Kunde oder Fabrik A oder B) transportiert werden, wo sie anschließend mit der entsprechenden Firmware unter Implementierung der erforderlichen Geschäftslogik A oder B versehen werden müssen, und daher auch aus der Ferne in sicherer Weise aktiviert werden müssen. Die vorliegende Beschreibung stellt eine Referenzarchitektur basierend auf den vorgenannten kumulativen Erfordernissen vor, die auch das höchste gegenwärtig bekannte Level an Schlüsselschutz und Zugangskontrolle ermöglicht. Der zugrundeliegende Ansatz bereitet damit den Weg für praktische Konstruktionen von belastbaren kritischen Infrastrukturen (Resilient Critical Infrastructures).

## I. Einleitung

Bereits durch die vorhergehende Arbeit des Erfinders wurde demonstriert, dass die sichere Aktivierung von IoT-Geräten fragil und indirekt anfällig ist (siehe Lo Ra WAN Over-the-Air Activation and Activation By Personalization protocol flaws). Dieser Anfangsschritt ist vielleicht der kritischste aller Prozesse, bedenkt man seine große und fundamentale Abhängigkeit von dem Gesamtsicherheitslevel des zugrundeliegenden Identitäts- und Zugangs- sowie Schlüsselmanagements; daher der Begriff "symbiotische Sicherheit" in Anspielung auf die Kette von Abhängigkeiten, die zur Sicherung der gesamten Architektur erforderlich ist. Da der Onboarding-Workflow im Wesentlichen von der Back-End-Infrastruktur als Teil der genannten Architektur gesteuert und kontrolliert wird, erörtert dieses Paper wichtige Probleme und Lösungen mit dem Fokus auf zwei prominente Infrastruktur-Hostingumgebungen, die in den nachfolgenden Abschnitten vorgestellt werden. Darüber hinaus ist die Arbeitshypothese an diesem Punkt, dass das entfernte Back-End nur die im Hinblick auf die gegenseitige Authentisierung, Vertrauenswürdigkeit durch Verschlüsselung und Integritätskontrolle stärksten Kommunikationsendpunkte zulässt. Ein wichtiger Hinweis ist hierbei, dass der de-facto Netzwerksicherheitsstandard, der diese Anforderungen implementiert, die Transport Layer Security oder kurz TLS ist [1]. Die unvermeidbare Abhängigkeit von TLS und die daraus resultierende Störquelle der Implementierung derselben in eigebetteten Geräten ist am besten durch das folgende Zitat beschrieben: "The current reality is that we don't have many if any serious alternatives to TLS/DTLS or SSH for securing this application-level connection or route today. TLS is far from being a perfect fit for many reasons I laid out here, and not least because of the weight in footprint and compute effort of the TLS stack which is too heavy for inexpensive circuitry. SSH is a reasonable alternative from the existing popular protocol suites, but suffers from lack of a standardized session resumption gesture. [Die gegenwärtige Realität ist, dass wir heute nicht viele, wenn überhaupt eine ernsthafte Alternative zu TLS/DTLS oder SSH für die Sicherung dieser Verbindung oder Route auf Anwendungsebene haben. TLS ist aus vielen, vom mir hier dargelegten Gründen weit davon entfernt, eine perfekte Lösung zu sein, und dies nicht zuletzt, wegen des Implementierungsumfangs (Footprints) und des Rechenaufwands der TLS-Logik, das zu hoch für kostengünstige Schaltungen ist. SSH ist eine geeignete Alternative aus den existierenden populären Protokollsuiten, jedoch fehlt eine standardisierte Möglichkeit für Sitzungswiederaufnahmen.]" [10] Wichtiger als die Fortsetzung der Sitzung ist das explizite Vertrauensmodell von SSh, bei welchem öffentliche Schlüssel eins-zu-eins bzw. persönlich/individuell ausgetauscht sowie autorisiert werden und diesen vertraut werden muss. Im Gegensatz dazu ist bei TLS das Vertrauen implizit; wenn beide Parteien bei einer beliebigen Kommunikation der gleichen Zertifizierungsstelle vertrauen, vertrauen sie automatisch einander, wodurch die gegenseitige Authentisierung wiederum erheblich vereinfacht wird.

A. Cloud-Computing und IoT-Referenzplattformen

Zwei der herausragendsten Beispiele für cloud-basierte Rechenumgebungen zur Durchsetzung dieses Prinzips sind AWS und Azure. Zu einer Zeit, als Microsoft mit seiner entsprechenden Plattform mit dem Namen "AZURE" lediglich als "visionär" eingestuft wurde, wurde AWS oder Amazon Web Services im Jahr 2013 zum unangefochtenen Anführer auf dem Gebiet der Cloud Computing Provider [2]. Jedoch kann die allgemeine Struktur der meisten, wenn nicht aller Hosting-Umgebungen mit dem Begriff "Virtuelle Maschinen" (VM) und "Storage Area Networks" (SAN) zusammengefasst werden. Während erstere im Grunde eine Art von Bare-Metal-Hypervisor-Technologie verwenden, um mehrere Betriebssysteme (und damit Virtuelle Maschinen) auf einer einzigen Hardwareeinheit zu betreiben, vereinen letztere sämtliche erforderliche physische Speicher für diese Virtuelle Maschinen in einem gewidmeten Hardwarestack, der in seinem eigenen Netzwerkraum enthalten ist (daher der Name Storage Area Network), in dem sich Virtuelle Maschinen mit ihren entsprechenden Speicherplätzen, besser bekannt als "Virtual Disks", verbinden und an diese anschließen können. Auf einem höheren Level stellen Cloud-Computing-Plattformen üblicherweise ebenfalls Dienstleistungen einer gewidmeten Datenbank sowie Verwaltungs- und Netzwerkdienstleistungen bereit. Sowohl AWS, als auch Azure zeichnen sich ebenfalls durch ihre Sicherheitsangebote aus, bei denen eine Vielzahl verschiedener Optionen im Hinblick auf den Datenschutz während der Speicherung durch starke Verschlüsselung, regionale VM-Ausführung oder Geo-Positionierung sowie hardware-basierte Schlüsselverwaltung vorgesehen sind. Kürzlich haben beide Anbieter begonnen, in gewidmete neuronale Netzwerkmodelle und Dienstleistungen zur Unterstützung der Idee und der Realisierung von maschinellem Lernen zu investieren, bei welchen auf der Basis eingehender Rohdaten getroffene Vorhersagen mit der Zeit genauer werden.

1) AWS IoT: AWS bietet seine eigene IoT-Referenzarchitektur an [3], die im Wesentlichen aus Amazon FreeRTOS und AWS IoT Core besteht. Amazon FreeRTOS [4] basiert auf dem bekannten FreeRTOS Betriebssystem für Mikrocontroller, bei welchem AWS-spezifische Software-Bibliotheken enthalten sind, um eine leicht verfügbare Firmware oder ein solches Echtzeitbetriebssystem (Real-Time Operating System (RTOS)) für eine Anzahl von qualifizierten MCU (micro controller unit oder Mikrocontrollereinheit) bereitzustellen [5]. Die Konnektivität mit dem IoT Core ist durch MQTT (Message-Queuing Telemetry Transport) hergestellt, die wiederum mit Hilfe von TLS gesichert ist. Es ist wichtig, zu erwähnen, dass AWS IoT Core nur wechselseitige bzw. Zwei-Wege-TLS (auch bezeichnet als two-way TLS) akzeptiert, bei welcher nicht nur die Serverseite (IoT Core) sich gegenüber dem Client (IoT Node) authentisiert, sondern auch von dem Client erwartet, dass dieser im Gegenzug dessen eigene X.509 v3 DIGITAL CERTIFICATE präsentiert [6]. Während diese unabdingbare Anforderung (Anmerkung: TLS client-seitige Authentisierung kann auch optional sein) TLS vom Standpunkt des Identitäts- und Zugangsmanagements zu einem "Vorbild an Tugend" macht, stellt sie gleichzeitig ein großes organisatorisches Hindernis für den Entwickler dar, der gezwungen ist, eine Zertifizierungsstelle einzurichten und diese als Public Key Infrastructure (PKI) aufrechtzuerhalten, um sicherzustellen, dass seine Geräte authentisieren und somit an dem AWS IoT Angebot teilnehmen können. Das Einrichten solider PKI-Systeme ist eine schwierige Aufgabe, die fortgeschrittene Kenntnis auf dem Gebiet der kryptographischen Schlüsselverwaltung erfordert, wie in diesem Paper dargelegt werden wird. Darüber hinaus bringen Zertifizierungsstellen stets erheblichen Verwaltungsmehraufwand mit sich, der sorgfältige Planung und Ausführung erfordert. Während AWS IoT Zertifikate verwenden kann, die sowohl von AWS IoT intern, als auch von einer bekannten externen Zertifizierungsstelle generiert wurden, erfordert eine ideale IoT-Umgebung, die den Grundprinzipien der INDUSTRIE 4.0 folgt [7], ein hohes Maß an Automatisierung, um unabhängige cyber-physische Systeme (Cyber Physical Systems (CPS)) zu ermöglichen, die nach [8] physische Prozesse und Berechnungen integrieren, indem sie eingebettete Computer und Netzwerke verwendet, um die zugrundeliegenden physischen Workflows zu steuern. Die Obergrenze von AWS IoT Core in Bezug auf PKI ist die Fähigkeit, eine Zertifizierungsstelle unter dem Account eines Entwicklers zu registrieren, was diesen noch nicht von der Verantwortung befreit, eine vollwertige Zertifizierungsstelle gemäß der zu erwartenden fachlichen Praxis zu betreiben.

Eine weitere wichtige Anmerkung ist, dass AWS IoT von Entwicklern verlangt, Zertifikate und die entsprechenden kryptographischen Schlüssel zuvor in einfache Byte-Arrays oder C-Strings zu konvertieren, bevor diese in das von der MCU auszuführende binäre Abbild eingebettet oder fest programmiert werden (siehe [6], S. 39). Dies bietet wenig bis keinen Schutz des geheimen Schlüsselmaterials, wenn man berücksichtigt, dass IoT Nodes oder CPS in einem Bereich arbeiten sollen, in dem sie potenziell feindlichem physischem Zugang ausgesetzt sind. Sämtliche gegenwärtig verfügbaren MCU-Module, die für das AWS IoT-Angebot qualifiziert sind [5], sind mit Flash- und EEPROM-Speichern ausgerüstet, die für ihre Empfindlichkeit für sowohl invasive, als auch nicht-invasive Datenmanipulations- und -extraktionstechniken bekannt sind.

Im Hinblick auf den Gesamtverbrauch des MCU-Code-Raums, plant AWS zum Zeitpunkt des Verfassens dieser Beschreibung den Release eines Over-the-Air-Updatemechanismus (OTA), der den Nachteil des Speicherns zweier Firmware-Images im Programmspeicher des Moduls zur selben Zeit mit sich bringen wird.

2) Microsoft Azure IoT: Microsofts IoT-Architektur weist im Grunde dieselbe Struktur wie diejenige von AWS auf, indem sie Standard-Kommunikationsinterfaces IoT Nodes über einen IoT Hub aussetzt, welcher das Äquivalent zu AWS IoT Core darstellt. Die allgemeine Empfehlung von Microsoft ist es, REST [11] über HTTPS einzusetzen, wobei der Payload in JavaScript Object Notation (JSON) formatiert ist, welche, wie in Fig. 7 dargestellt, für Menschen lesbar ist [12] durch das Abfangen des ansonsten TLS-geschützten Verkehrs zwischen einer exemplarischen client-seitigen Anwendung, die durch konstantes Übertragen von Telemetriedaten ein IoT-Gerät simuliert, und einer IoT Hub-Instanz, welche diese empfängt und verarbeitet.

Das Abfangen und Aufzeichnen des Datenverkehrs erfolgte mittels des Open-Source interaktiven HTTPS Proxy mitmproxy (man in the middle proxy) [13], der für verschiedene Plattformen einschließlich Docker [14] und das Windows Subsystem für Linux (WSL) [15] erhältlich ist. Letzteres ermöglicht das Umleiten sämtlichen relevanten Datenverkehrs zu einer Anwendung (beispielsweise mitmproxy), die in einem eingebetteten Linux-Container in Windows läuft, so als ob diese Anwendung direkt in Windows liefe.

Außer den IoT-Geräten sind weitere Kernkomponenten:

1) IoT Hub: schafft sichere Kommunikationsendpunkte durch die stetige Verwendung von TLS/HTTPS und verwaltet Geräte

2) IoT Hub Device Provisioning Service: registriert automatisch IoT-Geräte bei einem IoT Hub, führt einen Lastausgleich über mehrere Hubs durch und gleicht verschiedene Geräteverbindungen mit deren jeweiligen IoT Lösungen nach Multi-tenant-Art ab

3) Streamprozessor: regelbasierte Downstream-Auswertung von Daten (sobald sie extrahiert und von dem IoT Hub geliefert werden)

4) Speicher: dauerhaftes Hosten von verarbeiteten Daten mit optionalem festem Datenschutz beim Speichern durch starke Verschlüsselung und hardwarebasierte Schlüsselverwaltung (ein weiteres optionales Element)

5) Geschäftslogikintegrator: integriert verarbeitete und gespeicherte Daten mit Web- oder generischen Anwendungen unter Implementierung bestimmter Geschäftslogik

B. Target-Plattform, Auswahlkriterien und innere IoT Mechanismen

Für unsere Referenzarchitektur wurde vorliegend aus verschiedenen Gründen Microsoft Azure als die Target-Plattform ausgewählt:

• nahtlose Integration von Microsoft-Produkten, -Betriebssystemen, und -Unternehmensmanagementlösungen, beispielsweise Azure Active Directory [16]

• enge Integration von bekannten Entwicklungstools, beispielsweise Microsoft Visual Studio DIE mit eingebauter Identitäts- und Zugangsverwaltung sowie Versionierungssystem

• die Fähigkeit, nicht nur Virtuelle Maschinen einzusetzen, sondern auch gewidmete eigenständige Web-Anwendungen und Datenbanken

Geopositionierungsoptionen und Unterstützung zum Binden von Anwendungen und Virtuelle Maschinen an gewidmete physische Hardwareeinheiten. Dies kann von besonderem Interesse in hochkritischen Umgebungen auf Infrastrukturebene sein, die gewährleisten müssen, dass alle potentiellen Angriffsvektoren antizipiert und behoben werden. Jüngere Beispiele für eine derartige Bedrohung sind der Meltdown- und der Spectre-Angriff. Während Meltdown Anfälligkeiten und Fehler von CPU-Architekturen ausnutzt, um schädlichen Anwendungen das Durchdringen der Sperre zwischen dem User-Space und dem Betriebssystem (kernel) zu durchdringen [18], zielt Spectre auf die Isolierschicht zwischen User-Space-Anwendungen ab, um Datenverluste in legitimen Anwendungen zu verursachen [19].

• in hohem Maße skalierbare AZURE KEY VAULT [17], basierend auf physischen HIGH SECURITY MODULE (HSM) Anwendungen mit nativem Schlüsselmanagementsupport für Virtuelle Maschinen und Datenbanken.

Vor der Verwendung von IoT-Geräten im praktischen Einsatz besteht stets das komplexe Problem der ersten Bereitstellung, das einsetzt, sobald die auf der Technologie eines bestimmten Verkäufers basierenden IoT-Geräte erworben wurden und in einem nachfolgenden Schritt in deren Produktionsumgebung gebracht werden müssen. Der nächste Abschnitt dieser Beschreibung beschäftigt sich mit der Frage, warum dies ein ernsthaftes Problem ist, und wie dies auf sichere Weise gelöst werden kann. Soweit es Azure IoT betrifft, beginnt jede Anwendung mit dem Prozess der Geräteanmeldung (Erstanmeldung) bei einer erfolgreichen Authentisierung entweder eines einzelnen Geräts oder einer Gruppe solcher Geräte. Die Authentisierung erfolgt über einen der beiden hauptsächlichen Bestätigungsmechanismen: X509 certification und Trusted Platform Module (TPM). Während die client-seitige Zertifikatauthentisierung eine bekannte und akzeptierte Methodik als Teil des TLS-Standards ist [1], erfordert die TPM-Bestätigung das Vorhandensein einer TPM- oder TPM-artigen Komponente (TPM kann eigenständig, integriert, durch einen Hypervisor virtualisiert oder softwarebasiert sein, obwohl letzteres weniger sicher als eine rein hardwarebasierte Alternative ist). TPM ist im Grunde ein kryptografischer Prozessor, der einen asymmetrischen Endorsement Key aufweist, der von dem TPM-Hersteller in jede Einheit eingebettet wird. Die TPM-Bestätigung nutzt diesen Schlüssel zum Beweis des Besitzes des privaten Teils desselben in einem Challenge-Response-Protokoll, wobei der Device Provisioning-Dienst eine Nonce erzeugt, diese mit dem TPM-Schlüssel verschlüsselt (TPM weist eine Hierarchie von Schlüsseln auf, an deren Spitze stets der Endorsement Key steht), sendet sie zum Modul zurück und erwartet eine von der Nonce signiertes eine Shared Access Signature-Token zu erhalten [22].

Der undurchsichtige TPM-Ansatz für die Endorsement Key-Erzeugung ist auch einer der größten Kritikpunkte an der Trusted Platform: es gibt keine Garantie, dass der Hersteller nicht willentlich eine Kopie jedes einzelnen Schlüssels speichert, wobei ein derartiger zentraler Speicher beeinträchtigt, auf andere Art ein Zugriff ohne Kenntnis des TPM-Besitzers erfolgen, oder im schlimmsten Fall vielleicht die Beute eines staatlichen oder staatlich unterstützten Angreifers werden. Diese Punkte werden seit langer Zeit von verschiedenen Seiten kritisiert, einschließlich des Deutschen Bundesamts für Informationssicherheit [20]. Kritische Schwachstellen in einer derartigen weitverbreiteten, dennoch isolierten und starren Technologie haben verheerende Auswirkungen auf alle davon abhängigen Geräte, wie im letzten Jahr durch die Entdeckung einer fehlerhaften Handhabung von RSA-Primzahlen in einer essentiellen kryptografischen Bibliothek, de von TPM-Herstellen verwendet wird. Der in [21] beschriebene Angriff konnte bei 2048-Bit-Schlüsseln private RSA-Schlüssel im Durchschnitt in 50 CPU-Jahren faktorisieren (was nunmehr wirksam parallelisiert werden kann, indem genau die Cloud-Computing-Plattformen eingesetzt werden, auf denen in der Beschreibung der Fokus liegt), indem lediglich der entsprechende öffentliche Schlüssel geprüft wurde.

Eine andere Art der Authentisierung gegen einen IoT Hub ist die Verwendung von gemeinsamen symmetrischen Schlüsseln (shared symmetric keys) zum Erzeugen oder Ableiten von Sicherheitstokens mit einer vorab definierten Lebensdauer. Dies ist im Grunde derselbe Ansatz wie bei dem zuvor beschriebenen TPM-bestätigten Shared Access, nur dass hierbei nicht erwartet wird, dass die erforderlichen symmetrischen Schlüssel durch Hardware geschützt sind. Tatsächlich existiert keine Empfehlung für eine Lösung des fundamentalen Problems des Austauschs von symmetrischen Schlüsseln, was genau der Punkt ist, den die vorliegende Beschreibung in den folgenden Abschnitten anzusprechen beabsichtigt. Das Token-Signing als solches ist eine HMAC-SHA256 Operation, bei welcher der Pre-Shared Symmetric Key für diese Funktion verwendet wird [23].

Zusätzlich zu dem zuvor umrissenen nativen Authentisierungsmechanismus unterstützt Azure auch hybride und etwas exotische Muster, die als Custom Gateway implementiert werden können, um nicht nur eingehende Verbindungen zu authentisieren, sondern verarbeitet diese auch als Teil der Protokolllogik [24]. Microsoft nennt als Beispiel für ein Custom Gateway das mittlerweile veraltete RFC 4279 "Pre-Shared Key Ciphersuites for Transport Layer Security (TLS)". Der vorgeschlagene Standard verwendet drei verschiedene Verfahren, um Zertifikate zu vermeiden, die eine Public Key Infrastructure in Form einer Zertifizierungsstelle erfordern, die einigen Aufwand beim Aufbau und bei der Aufrechterhaltung erfordert:

- PSK Key Exchange verwendet symmetrische Schlüssel, die vorab derart geteilt werden, dass die Schlüssel selbst nie über das Netzwerk ausgetauscht werden. Stattdessen zeigt oder deutet die Identität seines Schlüssels als Teil der ServerKeyExchange-Nachricht an. Der Client bestätigt in der darauffolgenden ClientKeyExchange-Nachricht, dass er über den entsprechenden PSK verfügt. Das resultierende Premaster-Geheimnis besteht sodann mehr oder weniger in einem auf beiden Seiten erfolgenden Nachlesen des PSK selbst. Die eigentlichen Anwendungsdaten werden unter Verwendung des korrekten PSK symmetrisch verschlüsselt.

- DHE_PSK Key Exchange entspricht dem Vorhergehenden, jedoch erfolgt, anstatt dem statischen PSK, der asymmetrische Diffie-Hellman (DH) Key Exchange, um einen symmetrischen Sitzungsschlüssel zu berechnen. Wie der Name vermuten lässt, ist dieser Schlüsselaustausch ebenfalls ephemer, was bedeutet, dass die DH-Parameter für jede neue Sitzung dynamisch erzeugt werden. Letzteres gewährleistet Folgenlosigkeit (Forward Secrecy), d.h. selbst, wenn sämtliche vorherigen Sitzungen beeinträchtigt oder unterbrochen sind, bleibt die aktuelle oder die nächste Sitzung davon unberührt. Jedoch handelt es sich bei DH um ein nicht-authentisiertes Schlüsseleinigungsprotokoll, wodurch es für aktive Angriffe, beispielsweise Man-in-the-Middle, anfällig ist.

- RSA_PSK Key Exchange: Während bei den ersten beiden Optionen sämtliche zertifikatsbezogenen Nachrichten in dem ansonsten nahezu identischen TLS-Handshake entfallen, verwendet RSA_PSK das serverseitige Zertifikat. Der tatsächliche Gewinn liegt in dem an sein Zertifikat gebundenen öffentlichen Serverschlüssel, der von dem Client zum Verschlüsseln einer Nachricht an den Server verwendet wird, die einen 46-Byte Zufallswert enthält. Letzterer wird mit dem PSK verknüpft, um das Premaster-geheimnis zu bilden. Ähnlich dem PSK ist bei dieser Option keine Folgenlosigkeit (Forward Security) gegeben. Ein zusätzlicher Wert ist der 46-Byte Zufallsstring, der als Salt in einem potentiell schwachen (beispielsweise menschengewählten) PSK interpretiert werden kann, der ansonsten für einen Wörterbuchangriff anfällig wäre.

Zusammenfassend erfüllt keiner der genannten Modi wirklich alle wesentlichen Sicherheitsziele, nicht einmal die RSA_PSK-Option, die hinsichtlich der Implementierung viel Spielraum lässt, basierend auf der Beobachtung, dass das Hauptziel des vorgeschlagenen Standards das Vermeiden der Verwendung von Zertifikaten ist, was wiederum nahelegt, dass keine PKI vorgesehen ist. Folglich würden die meisten Anwendungen an diesem Punkt auf die Verwendung selbst-signierter Zertifikate zurückgreifen, wodurch eine starke Authentisierung vollständig untergraben wird. Um es noch schlimmer zu machen, liegt die Frage, wie der PSK zwischen den Parteien überhaupt geteilt werden soll, außerhalb des Rahmens des RFC, wodurch keine konsistente praktische Lösung für das vorliegende Problem geschaffen ist.

Als letzter Schritt in dem gesamten Workflow müssen IoT-Netzwerke in der Lage sein, den Prozess der Geräteanmeldung und -konfiguration durch Implementieren des Device Provisioning Service Client Software Development Kit (SDK) [25] abzuschließen. Diese Software kommuniziert mit dem Device Provisioning-Dienst zur initialen Authentisierung auf der Basis eines der zuvor erläuterten Bestätigungsverfahren. Danach ist das Gerät bei dem designierten IoT Hub angemeldet, so dass es zu diesem Zeitpunkt seine Grundkonfiguration abrufen und mit der Übertragung von Telemetriedaten beginnen kann.

C. Was fehlt

Wie vorangehend umrissen, hat Microsoft einen umfassenden Rahmen für IoT-Anwendungen geschaffen, jedoch nicht ohne Beschränkungen: der gesamte Workflow beginnt erst, nachdem ein IoT-Knoten seine Anmeldung erfolgreich durchlaufen hat und bei dem entsprechenden IoT-Hub angemeldet ist. Die verbleibende funktionale Lücke befindet sich zwischen dem Herstellungsprozess der IoT-Knoten, deren Bereitstellung und der letztendlichen Geräteanmeldung in der Cloud. Microsoft unterscheidet zwar zwischen dem Herstellungs- und dem Cloud-Setup-Schritt, jedoch: "The Device Provisioning Service does not introduce a new step in the manufacturing process; rather, it ties into the existing step that installs the initial software and (ideally) the HSM on the device. [Der Geräteprovisionierungsdienst führt keinen neuen Schritt in den Herstellungsprozess ein; vielmehr ist er in den existierenden Schritt eingebunden, der die initiale Software und (idealerweise) das HSM auf dem Gerät installiert.]" [26] Was jedoch ist dieser existierende Schritt, wie kann er standardisiert werden und, was am wichtigsten ist, wie können HSM-artige Fähigkeiten in eingebettete Geräte mit begrenzten Ressourcen eingeführt werden? HSM-artige Eigenschaften sind sicher erforderlich, wenn es darum geht, den höchsten Grad des Schutzes von privaten Schlüsseln insbesondere im Kontext einer zertifikatbasierten Authentisierung zu erreichen. Microsoft beurteilt daher die Stärke des zertifikatbasierten Ansatzes wie folgt: "The overall result is an optimal supply chain with built-in accountability through use of cryptographic chain of trust. [Das Gesamtergebnis ist eine optimale Versorgungskette mit eingebauter Integrierbarkeit durch die Verwendung einer kryptographischen Vertrauenskette.]" [27]

**II. PKI-basierter IoT-Ansatz oder IoT-Stammzertifizierungsstellenplattform als Dienst (Platform as a Service (PaaS))**

A. Verbinden der Punkte in der Cloud

Als Folge der in dem vorangehenden Abschnitt festgestellten Lücke, stellt die vorliegende Beschreibung eine Referenzarchitektur auf der Basis von X509 Stammzertifikaten vor, bei welcher die zugrundeliegende PKI ausschließlich existierende Azure Cloud-Komponenten nutzt, während die Kontrolle und die Verantwortung von dem Hersteller weg auf den Kunden oder Anwender der resultierenden IoT-Anwendung übertragen wird. Zum Zeitpunkt der Abfassung dieser Beschreibung bietet Azure keinen nativen Zertifizierungsstellendienst (CA) an. Daher kann eine Windows CA entweder als eigenständiger Host oder als Active Directory Certificate Service (ADCS) vorliegen, der Teil eines Active Directory als solches ist, wobei ein ADCS stets die einzige autoritative Enterprise Root CA ist. Um die Dinge noch schlimmer zu machen, stehen die wichtigste Anforderung und das beste Verfahren für professionelle CA Operationen, um sämtliche wichtigen Schlüssel in einem hardwarebasierten Schlüsselverwaltungssystem oder HSM zu erzeugen und zu halten, in dieser Situation nicht zur Verfügung, da Azure Key Vault (Microsofts interner Remote-HSM-Dienst) ADCS nicht unterstützt. Der Vollständigkeit halber sei angemerkt, dass AKV eine Option zur Erzeugung hardwaregeschützter Zertifikate anbietet, jedoch nur in Verbindung mit mehreren bekannten Zertifizierungsstellen, die mit Key Vault verpartnert sind [28]. Folglich ist es unmöglich, eine solide isolierte CA mit der korrekten und erwarteten HSM-Bestätigung aus den gegenwärtig verfügbaren Azure Bausteinen zu errichten.

Die Grundidee des in Rede stehenden Konzept ist folgende: Die Stammzertifizierungsstelle muss ihren Stammschlüssel innerhalb von AKV erzeugen, um das übliche, auf hohem Level befindliche beste Verfahren zu implementieren. In Anbetracht der genannten Beschränkungen, müssten sämtliche PKI-Operationen ausgelagert und an eine eigenständige Virtuelle Maschine (VM) für den Betrieb einer multimandantenfähigen Stammzertifizierungsstelle delegiert werden, die sowohl ihre Festplatte durch AKV sichern, als auch direkt auf die verschlüsselte Datenbank zugreifen würde, um Schlüsselpaare und Zertifikate dort zu speichern. Schließlich würde die Middleware-Web-Anwendung zunächst diese VM instruieren, ein IoT-Gerät in seinem Namen zu registrieren und sowohl das Schlüsselpaar, als auch das entsprechende Zertifikat aus dieser Datenbank abrufen, da sie die einzige andere Komponente ist, die berechtigt ist, auf die AKV-Partition mit dem darin enthaltenen Datenbankschlüssel zuzugreifen. Aufgrund des Wesens dieser Anwendung würden sämtliche empfindlichen Daten von dieser in einer rein transienten Weise gehandhabt, d.h. es wird kein Schlüsselmaterial irgendwo außerhalb der verschlüsselten Datenbank dauerhaft gehalten oder gespeichert.

Das Gesamtpaket bestehend aus dem signierten Zertifikat und dem entsprechenden Schlüsselpaar würde sodann an das IoT-Gerät über einen sicheren und vertrauenswürdigen Kanal zurückgesendet, wobei das Gerät an diesem Punkt beginnen kann, damit bis zur nächsten automatischen Schlüssel- und Zertifikatserneuerung auf der Basis desselben Arbeitsablaufs zu verfahren. Ein anderes starkes Argument für einen sicheren und dauerhaften Zertifikatspeicher ist das Problem der potentiellen Resilienz und der generellen Konnektivität auf der Seite des Clients, das in der Beobachtung resultiert, dass der gesamte Zertifikat- und Schlüsselverwaltungslebenszyklus am besten durch eine zentarale Middleware-Webanordnung als Teil der gesamten cloud-basierten Lösung gehandhabt wird. Hierbei würden sämtliche Schlüsselpaar- und Zertifikaterzeugungsanfragen von der genannten Anwendung verwaltet und in einer AKV-gesicherten MSSQL Datenbank aufgezeichnet werden. Auf diese Weise könnte jedes IoT-Gerät oder jeder IoT-Knoten mit dem Abfragen der PKI-Anwendung fortfahren, bis es erfolgreich eine Kopie des aktuellen Zertifikats zusammen mit dem zugehörigen Schlüsselpaar empfangen hat. Selbst wenn die Übertragung plötzlich unterbrochen würde, gingen das wertvolle Schlüsselpaar und das Zertifikat nicht verloren. Das Diagramm in Fig. 8 zeigt sämtliche wesentlichen Komponenten der Referenzarchitektur zusammen mit deren Rollen, wichtigen Schnittstellen, welche sie zur Verfügung stellen sowie die resultierenden Interaktionen.

B. "Fill the Air Gap" bzw. "Lückenfüller" oder Sichere Erstanmeldung und zielspezifisches Firmwareupload

Der nachfolgende Algorithmus 1 zeigt den Prozess der ersten Zertifikatanmeldung in Verbindung mit dem Firmwareeinsatz, der durch die in dem Algorithmus 2 beschriebene Geräteanmeldung abgeschlossen wird. Der aus diesen Algorithmen bestehende Arbeitsablauf kann wie folgt zusammengefasst werde. Zu Beginn werden sämtliche IoT-Module (beispielsweise sS2F [29], [30]) nur mit dem Bootloader versehen ausgeliefert. Als Teil des Produktisierungsprozesses sollen sie die Anmeldeanwendung kontaktieren (siehe Alg. 1, Zeile 6), um die entsprechende Firmware abzurufen (bei welcher es sich um eine standardmäßige Firmware oder eine bestimmte Kundenlösung handeln kann). Bevor dies geschieht, hilft eine SRP-basierte [31] Kommunikation bei der Authentisierung, wobei an diesem Punkt en verschlüsselter Kanal zwischen den Parteien hergestellt wird (siehe 6, Zeile 22). SRP steht für Secure Remote Password-Protokoll und ist eines der stärksten Schutzverfahren für symmetrische Authentisierung und Daten bei der Übertragung, welches einen interaktiven kenntnisfreien Beweis (Zero-Knowledge proof) des Besitzes eines geheimen Elements, beispielsweise eines Passworts oder eines kryptografischen Schlüssels, verwendet. In korrekter Weise angewendet, was beispielsweise mit einer sachgemäßen Implementierung des SRP in dem Bootloader (siehe nächster Abschnitt) steht und fällt, kann es die üblichen Nachteile von symmetrischen Authentisierungs- und Schlüsselaustauschmechanismen überwinden. Die symmetrische Anforderung ist in diesem Zusammenhang äußerst wichtig, da Azure keine irgendwie geartete Lösung für die Erstanmeldung oder eine solide PKI im Allgemeinen anbietet. Daher besteht die Notwendigkeit, die nicht-existenten Zertifikate zu ersetzen, die ansonsten selbst-signiert (d.h. ohne irgendeinen Vertrauensanker) und in einem zusätzlichen Vorabschritt, welcher den Gerätezulieferer oder -hersteller involvieren würde, vorab bereitgestellt werden müssten.

Danach fordert die Anmeldeanwendung ein Zertifikat für den Knoten an und pflegt, sobald dies abgeschlossen ist, dieses in das Gerät ein (1, Zeile 10 ff). Schließlich installiert der IoT-Knoten sowohl die Firmware, als auch das Zertifikat (1, Zeile 4), wobei er an diesem Punkt auf authentisierte Weise den IoT-Hub kontaktieren kann, um seine Anmeldung abzuschließen und den regulären Betrieb kurz danach aufzunehmen (siehe Alg. 2).

C. Anforderungen für symbiotische Sicherheit

Der in dem Algorithmus 1 in Pseudocodenotation dargelegte Erstanmeldungsworkflow hängt von dem Vorgang in der Zeile 22 ab, welche das Secure Remote Password-Protokoll (SRP) als den wichtigsten Baustein der vorliegenden Lösung implementiert. Der Kürze und der Kohärenz der für dieses Paper wichtigen Details wegen, soll es genügen, festzustellen, dass SRP ein ephemeres Diffie-Hellman-artiges Verfahren verwendet, wobei die einzigen beiden festen Parameter das Client-Passwort und der entsprechende, von dem Server gehaltene Verifier sind, welcher wiederum unter Verwendung der Stärke des Discrete Logarithm Problem (DLP) aus dem Passwort abgeleitet ist. Darüber hinaus verwendet SRP keine asymmetrischen Signaturen, um die Authentizität der Kommunikationspartner sicherzustellen (was Diffie-Hellman nicht selbständig leisten kann). Letzteres macht SRP nicht nur schneller, sondern auch zu einer perfekten Lösung für das Initiieren einer sicheren Kommunikation in einer Prä-Zertifikat- oder Prä-PKI-Umgebung. Für weitere Informationen zu den kryptographischen Details des Protokolls wird auf dessen vollständige Beschreibung verwiesen [31].

Jedoch existiert selbst mit SRP ein weiteres wesentliches Problem, das in diesem besonderen Szenario zu lösen ist. SRP sichert üblicherweise interaktive Logins, wobei zum Zeitpunkt der Nutzeranmeldung der Server den Verifier aus dem eingegebenen und mit einem Salt versehenen Passwort berechnet und nur die Nutzeridentität, den Salt sowie den Verifier in seiner internen Datenbank behält. Angesichts eines gewissen Grads der Automatisierung, muss der Verifier seinen Weg in die Datenbank des Servers finden, ohne potentiellen Gegnern ausgesetzt zu sein (siehe Algorithmus 3). Der Grund für die Geheimhaltung des Verifiers ist das Passwort als das potentiell schwächste Glied, das den üblichen effektiven Angriffen ausgesetzt ist, beispielsweise dem Wörterbuchangriff. Letzterer verwendet die Beobachtung, dass die meisten Passwörter angesichts ihrer auf Wörtern und Sprachelementen basierenden (sogar partiellen) Konstruktion (daher die Bezeichnung Wörterbuchangriff), schlecht gewählt sind. Dies ermöglicht einen weitreichenden Grad der Vorberechnung, wobei an diesem Punkt Brute Force zu einer Abfolge schneller (und parallelisierter) Vermutungen wird, welche mäßig komplexe, dennoch anfällige Passwörter entschlüsseln kann. Zu diesem Zweck arbeitet ein effektiver Wörterbuchangriff gegen ein Passwort auf der Basis des aufgedeckten Verifiers desselben wie folgt:

$$x = H(s, p) \qquad\qquad (1)$$

$$v \equiv g^x \bmod n \qquad\qquad (2)$$

$$x' = H(s, p') \qquad\qquad (3)$$

$$v' \equiv g^{x'} \bmod n \qquad\qquad (4)$$

$$v' \stackrel{?}{=} v \begin{cases} yes: & \text{successful guess} \qquad (5a) \\ no: & \text{wrong guess, continue} \qquad (5b) \end{cases}$$

(1) zeigt, wie SRP den privaten Schlüssel basierend auf dem Salt s, dem Passwort p und einer Hash-Funktion H() erzeugt. (2) verwendet DLP (siehe oben) zur Berechnung des Verifiers. Ein Angreifer mit Zugang zu s und v kann nun beginnen, Passwörter p' zu raten, um die entsprechenden x' und v' zu erzeugen (siehe (3) und (4)). Ein einfacher Vergleich von v' und dem bekannten v deckt das Originalpasswort auf, wenn die Vermutung erfolgreich war.

Dieser Angriff beweist, dass sämtliche kritischen Sicherheitsparameter (Critical Security Parameters (CPS)) bei der Speicherung unter Verwendung des besten Levels an Schutz gesichert sein müssen, welcher (wie zuvor angemerkt) durch hardwarebasierte Schlüsselverwaltungssysteme wie AKV bereitgestellt wird. Was diesen Ansatz symbiotisch sicher macht, ist das Beachten und das Erfordernis, dass, beginnend mit dem IoT-Knoten selbst, keine kritischen oder sicheren Informationen preisgegeben werden. Der Algorithmus 3 legt dar, wie dies genau erreicht werden kann: jedes Gerät erzeugt einen einzigartigen symmetrischen Schlüssel und speichert diesen dauerhaft in seinem Schlüsselspeicher. Statt diesen für direkte Berechnungen aufzudecken, stellt ein intermediäres Softwaredienstprogramm eine Verbindung mit dem Modul her und weist dieses an, seinen eigenen Verifier gemäß (2) zu erzeugen. Die aus dem Verifier, dem Salt und der Knoten-Identität bestehenden resultierenden Daten werden dem Anmelde-Webdienst über eine authentisierte Sitzung übermittelt. Sobald all dies sicher in die Cloud-Datenbank eingeschrieben wurde (was nur nach der vorläufigen Authentisierung durch das lokale Dienstprogramm erfolgt, ohne die Datenbank nach außen freizugeben), weist das Dienstprogramm den Bootloader an, das SRP-Protokoll mit den genannten Parametern aufzurufen. Die nachfolgenden Algorithmen 1 und 2 komplettieren den Gesamtworkflow, wobei an diesem Punkt jeder Knoten seine eigene Firmware und sein eigenes Zertifikat erhält. Zusammenfassend gesagt: die Bootstrap-Authentisierung und der Schlüsselaustausch erfolgen symmetrisch, um das Fehlen von Zertifikaten an diesem Punkt zu überwinden, das lokale Knoten-Programmierungsdienstprogramm (für 3 erforderlich) verwendet interaktive Nutzerauthentisierung (gefolgt von einer Autorisierung basierend auf der Nutzerrolle), um CSP an einen HTTPS Web Service zu übermitteln (dies muss nur ein Mal pro Programmiersitzung erfolgen, ungeachtet der Gesamtzahl der zu programmierenden Nodes, im Gegensatz zu einer Authentisierung jedes einzelnen Nodes; letzteres erfolgt noch durch die SRP-Bestätigung jedes Nodes im nachfolgenden Schritt) und um das Einbetten irgendwelcher CSP in die binäre Anwendung selbst (beispielsweise Zertifikat plus privater Schlüssel) für die Authentisierung zu vermeiden. Anstatt Geheimnisse zu verbergen, könnte das Programmierdienstprogramm zusätzlich von einem Zertifikat- oder Schlüssel-Pinning profitieren, wodurch, anstatt oder zusätzlich zu der von der entsprechenden Zertifizierungsstelle ausgehenden üblichen Vertrauenskette, dem von dem vorgenannten Web Service verwendeten öffentlichen Schlüssel explizit vertraut wird. Nicht zuletzt wird das individuelle Passwort (hier: geheimer Knoten-Schlüssel), das für den Verifier und die SRP-Sitzung erforderlich ist, nie offengelegt.

Um sicherzustellen, dass das Passwort oder der symmetrische Schlüssel die sicheren Grenzen des IoT-Knoten nie verlässt, bereiten die folgenden Anforderungen den Weg für eine effektive Konstruktion von HSM- oder SmartCard-artigen Hardwarestrukturen, um die Idee der symbiotischen Sicherheit zu ergänzen, wobei jede einzelne Komponente der gesamten Architektur jeweils nach seinen besten Möglichkeiten zu dem Gesamtlevel des Schutzes beiträgt. Wie in Fig. 3 dargestellt, wäre eine Referenz-Hardware-Crypto-Engine, die zur Erzeugung des Verifiers sowie zur Durchführung des SRP verwendet wird, idealerweise vollständig von der Nutzeranwendung (und daher der MCU, dem Flash und dem SRAM) isoliert. Der Schlüsselspeicher als solcher würde mit Hilfe der eFuse- oder der OLP-Technologie (One Time Programmable) implementiert, wobei dieser nicht verändert werden kann, sobald eine bestimmte Anzahl von kryptografischen Schlüsseln in diesen geschrieben wurde. Die Encryption Engine wäre letztlich die einzige Schaltung, welche diese Speichereinheit lesen würde, so dass sämtliche kryptografischen Operationen sodann innerhalb der Engine stattfinden - sehr ähnlich der HSM- oder SmartCard-Technologie. Für kritische Anwendungen oder Kunden könnte der Hersteller derartige Module mit einem leeren Schlüsselspeicher oder einem Schlüsselspeicher ausliefern, der durch einen einzigartigen zufallsgenerierten Schlüssel teilweise vordefiniert ist, welcher sodann dem Schutz (d.h. der Verschlüsselung) des Flash-Speichers oder eines anderen Schlüssels dienen kann, um die Integrität des Firmware-Images beispielsweise durch die HMAC-Funktion zu verifizieren. Dieser Ansatz auch jede Kritik umgehen, die ansonsten im Hinblick auf Plattformen dieser Art angeführt werden könnte (siehe die obigen Anmerkungen zu TPM).

D. Zukünftige Arbeit

Um zu dem Gesamtkonzept der Symbiotischen Sicherheit beizutragen, wird unser nächster Artikel zeigen, wie IoT-Systeme mit begrenzten Ressourcen höhere Sicherheitsprotokolle wie TLS implementieren können, um die in diesem Paper umrissene PKI-Idee zu unterstützen, und welche Entwicklungs- und Optimierungsverfahren die Rechengeschwindigkeit und die Effizienz erhöhen können.

---

**Algorithm 1** Initial Enrolment in Secure Factory

---

1: **for** $i \leftarrow 1$ to $n =$ delivered modules **do**

2:      $IoT\_Node$ :: Deploy and establish connectivity;

3:      $(MatchingFirmware, CertKeyPair) \leftarrow$
         $\hookrightarrow$ ENROLMENTVM(NodeSRPAuthParams);

4:      $IoT\_Node$ :: Install $MatchingFirmware$, write $Cert$ to memory, write $KeyPair$ into secure memory;

5: **end for**

6: **function** ENROLMENTVM(SRPParams)

7:      $AKVSessionID \leftarrow$
         $\hookrightarrow$ AZUREKEYVAULT(NodeSRPAuthParams, KeyID);

8:      Look up $NodeSRPAuthParams.NodeID$, $NodeSRPAuthParams.Salt$ and $NodeSRPAuthParams.Verifier$ in $SecureStorage$;

9:      SRP($NodeSRPAuthParams$);

10:      CA_VM($NodeSRPAuthParams.NodeID$, $AKVSessionID$);

11:      Open $SecureStorage$ using $AKVSessionID$;

12:      $CertKeyPair \leftarrow$
         $\hookrightarrow$ (SecureStorage.NodeID.sk, SecureStorage.NodeID.pk, SecureStorage.NodeID.NodeCert);

13:      $MatchingFirmware \leftarrow$
         $\hookrightarrow$ SecureStorage.NodeID.Firmware;

14:      IOT_HUB(NodeID, RootCACert, NodeCert);

15:      **return** $enc_{SecureChannelSessionKey}($
         $\hookrightarrow$ MatchingFirmware, CertKeyPair );

16: **end function**

17: **function** AZUREKEYVAULT(AuthParams, KeyID)

18:      Authenticate $AuthParams$;

19:      Open key vault $KeyID$;

20:      **return** $SessionID$;

21: **end function**

22: **function** SRP(NodeSRPAuthParams)  ▷ Secure Remote Password Protocol

23:     Do SRP using $NodeSRPAuthParams$;

24:     **return** $SuccessFlag, SecureChannelSessionKey$;

25: **end function**

26: **procedure** CA_VM(NodeID, AKVSessionID)  ▷ Certificate Authority

27:     Generate key pair $(NodeID.sk, NodeID.pk)$;

28:     Open $SecureStorage$ using $AKVSessionID$;

29:     $SecureStorage \leftarrow (NodeID.sk, NodeID.pk)$;

30:     Generate Certificate Signing Request;  ▷ CSR

31:     $rootCASecretKey \leftarrow$
            $\hookrightarrow SecureStorage.Customer[NodeID].$
            $\hookrightarrow rootCASecretKey$;

32:     $NodeCert \leftarrow$ (sign CSR with $rootCASecretKey$);

33:     $SecureStorage \leftarrow NodeCert$;

34:     Erase $rootCASecretKey$ from memory;

35:     Close $SecureStorage$;

36: **end procedure**

37: **procedure** IoT_HUB(NodeID, RootCACert, NodeCert)

38:     Install and register $(NodeID, RootCACert, NodeCert)$;

39: **end procedure**

---

**Algorithm 2** Device Registration with the Azure Cloud

---

**Ensure:** Successful initial enrolment

**Require:** Installed $(MatchingFirmware, NodeCert)$

1: Open two-way TLS channel using $NodeCert$;

2: DRS(RegistrationRequest, $NodeCert$);

3: **procedure** DRS(RegistrationRequest, NodeCert) ▷
  Device Registration Service

4:    Do device attestation using $NodeCert$;

5:    Register device with
  $IoT\_Hub[RegistrationRequest.CustomerID]$;

6: **end procedure**

7: Close TLS channel;

---

**Algorithm 3** Customer Device Bootstrap

---

**Ensure:** Internet connectivity, utility installed, IoT module
  attached via UART/USB, registered customer

1: Log into $EnrolmentVM\_WebService$ through local
  utility via https and username/password (admin or developer
  access)

2: **for** $i \leftarrow 1$ to $n$ = delivered modules **do**

3:    Power on module

4:    $NodeSRPAuthParams \leftarrow$
  BOOTLOADERSRP(createNodeSRPAuthParams); ▷
  $NodeSRPAuthParams$ = SerialNumber, Salt, Verifier

5:    $SecureStorage.NodeSRPAuthParams[i] \leftarrow$
    $\hookrightarrow NodeSRPAuthParams$;

6:    BOOTLOADERSRP(doSRP);

7: **end for**

---

**Literaturverzeichnis**

[1] Network Working Group, Proposed Standard / Request for Comments "The Transport Layer Security (TLS) Protocol Version 1.2", [Online]. Verfügbar unter: https://tools.ietf.org/html/rfc5246

[2] Gartner, "Magic Quadrant for Cloud Infrastructure as a Service", 19 August 2013, [Online]. Verfügbar unter: https://web.archive.org/web/ 20130825054202/http://www.gartner.com/technology/reprints.do?id= 1-1IMDMZ5&ct=130819&st=sb

[3] AWS, "AWS IoT", 2018, [Online]. Verfügbar unter: https://aws.amazon.com/iot/

[4] AWS, "Amazon FreeRTOS", 2018, [Online]. Verfügbar unter: https://aws.amazon.com/freertos/

[5] AWS, "Getting Started with Amazon FreeRTOS", 2018, [Online]. Verfügbar unter: https://aws.amazon.com/freertos/getting-started/

[6] AWS, "Amazon FreeRTOS Qualification Program Developer Guide", version 1.0.0, July 31, 2018, [Online]. Verfügbar unter: https://d1.awsstatic.com/product-marketing/iot/ Amazon-FreeRTOS-Qualification-Program-Developer-Guide-V1.0.0.pdf

[7] National Academy of Science and Engineering, "Recommendations for implementing the Strategic initiative INDUSTRIE 4.0", April 2013, pp. 23, 46-47, [Online]. Verfügbar unter: https://www.acatech.de/Publikation/recommenda-tionsforimplementing-the-strategic-initiative-industrie-4-0-final-report-ofthe-industrie-4-0-working-group

[8] Lee, E. A., 2008, "Cyber Physical Systems: Design Challenges", 11th IEEE Symposium on Object Oriented Real-Time Distributed Computing (ISORC), 363 - 369.

[9] Sergei P. Skorobogatov, "Copy Protection in Modern Microcontrollers", 2000, [Online]. Verfügbar unter: https://www.cl.cam.ac.uk/_sps32/mcu lock.html

[10] Clemens Vasters, Microsoft Developer Blog, "Service Assisted Communication for Connected Devices", February 9, 2014, [Online]. Verfügbar unter: https://blogs.msdn.microsoft.com/clemensv/2014/02/09/ service-assisted-communication-for-connected-devices/

[11] Roy Thomas Fielding, "Architectural Styles and the Design of Networkbased Software Architectures", 2000, [Online]. Verfügbar unter: https://www. ics.uci.edu/_fielding/pubs/dissertation/top.htm

[12] Microsoft, Azure IoT Services Reference Architecture, 2018, [Online]. Verfügbar unter: https://aka.ms/iotrefarchitecture

[13] mitmproxy, [Online]. Verfügbar unter: https://mitmproxy.org/

[14] Docker Public Repository, [Online]. Verfügbar unter: https://hub.docker.com/r/mitmproxy/mitmproxy/

[15] Microsoft, Windows Subsystem for Linux Documentation, [Online]. Verfügbar unter: https://docs.microsoft.com/en-us/windows/wsl/about

[16] Microsoft, "What is Azure Active Directory?", 2018, [Online]. Verfügbar unter: https://docs.microsoft.com/en-us/azure/active-directory/ fundamentals/active-directory-whatis

[17] Microsoft, "What is Azure Key Vault?", 2018, [Online]. Verfügbar unter: https://docs.microsoft.com/en-us/azure/key-vault/key-vault-whatis

[18] Moritz Lipp, Michael Schwarz, Daniel Gruss, Thomas Prescher, Werner Haas and Anders Fogh, Jann Horn, Stefan Mangard, Paul Kocher, Daniel Genkin, Yuval Yarom, Mike Hamburg, "Meltdown: Reading Kernel Memory from User Space", 27th USENIX Security Symposium, 2018

[19] Moritz Lipp, Michael Schwarz, Daniel Gruss, Thomas Prescher, Werner Haas and Anders Fogh, Jann Horn, Stefan Mangard, Paul Kocher, Daniel Genkin, Yuval Yarom, Mike Hamburg, "Spectre Attacks: Exploiting Speculative Execution", 40th IEEE Symposium on Security and Privacy, 2019

[20] German Federal Office for Information Security, "Report on Microsoft Windows 8 and TPM", August 2013, [Online]. Verfügbar unter: https://web.arhive.org/web/20160304004000/https://www.bsi.bund.de/DE/Presse/Pressemitteilungen/Presse2013/Windows TPM PI 21082013.html

[21] Matus Nemec, Marek Sys, Petr Svenda, Dusan Klinec, Vashek Matyas, "The Return of Coppersmith's Attack: Practical Factorization of Widely Used RSA Moduli", ACM Conference on Computer and Communications Security (CCS) 2017, [Online]. Verfügbar unter: https://acmccs.github. io/papers/p1631-nemecA.pdf

[22] Microsoft Azure, Nicole Berdy, "Device provisioning: Identity attestation with TPM", November 2017, [Online]. Verfügbar unter: https://azure.microsoft.com/de-de/blog/device-provisioning-identity-attestation-with-tpm/

[23] Microsoft Azure, "Control access to IoT Hub", July 2018, [Online]. Verfügbar unter: https://docs.microsoft.com/en-us/azure/iot-hub/ iot-hub-devguide-security

[24] Microsoft Azure, "Support additional protocols for IoT Hub", November 2017, [Online]. Verfügbar unter: https://docs.microsoft.com/en-us/azure/ iot-hub/iot-hub-protocol-gateway

[25] Microsoft Azure, "Understand and use Azure IoT Hub SDKs", March 2018, [Online]. Verfügbar unter: https://docs.microsoft.com/en-us/ azure/iot-hub/iot-hub-devguide-sdks

[26] Microsoft Azure, "Provisioning devices with Azure IoT Hub Device Provisioning Server", May 2017, [Online]. Verfügbar unter: https://docs.microsoft. com/en-us/azure/iot-dps/about-iot-dps

[27] Microsoft Azure, "Conceptual understanding of X.509 CA certificates in the IoT industry", September 2017, [Online]. Verfügbar unter: https://docs. microsoft.com/en-us/azure/iot-hub/iot-hub-x509ca-concept

[28] Microsoft, "Get started with Key Vault certificates", 2018, [Online]. Verfügbar unter: https://docs.microsoft.com/en-us/azure/sql-database/ transparent-data-encryption-byok-azure-sql

[29] PointBlank Security by Steen Harbach AG, "Security for Internet-enabled Products "Made in Germany"", 2018, [Online]. Verfügbar unter: https://www.pointblank.de/de/?file=files/assets/downloads/ PointBlank-Security pbTLS sS2E-Module Leaflet.pdf

[30] PointBlank Security by Steen Harbach AG, "sS2E Module Manual", 2018, [Online]. Verfügbar unter: https://www.pointblank.de/en/iot-security. html?file=files/assets/downloads/MS500 SS2E MODULE User Manual V1.0.pdf

[31] T. Wu, "SRP Protocol Design", 1998, [Online]. Verfügbar unter: http://srp. stanford.edu/design.htm

**Patentansprüche**

1. Mikrocontroller (10) zur Steuerung einer elektrischen und/oder einer elektronischen Vorrichtung, umfassend

   - einen Speicherbaustein (16) zum Speichern eines digitalen Zertifikats;
   - ein Netzwerkmodul (18) für die Herstellung einer Verbindung mit einem Netzwerk; und
   - einen Prozessor (20);

   **dadurch gekennzeichnet, dass**
   der Prozessor (20) dazu ausgelegt ist,

   - eine Verbindung mit einem in dem Netzwerk befindlichen Netzwerk-Computer (12) aufzubauen;
   - bei dem Netzwerk-Computer (12) nach einem digitalen Zertifikat anzufragen;
   - das digitale Zertifikat von dem Netzwerk-Computer (12) zu empfangen;
   - das digitale Zertifikat im Speicherbaustein (16) abzuspeichern;
   - eine Verifikation-Anfrage an den Netzwerk-Computer (12) zu senden; und
   - mit dem Netzwerk-Computer (12) Nutzerdaten auszutauschen, sofern eine vorherige Verifikation des digitalen Zertifikats des Mikrocontrollers (10) erfolgreich war.

2. Mikrocontroller (10) nach Anspruch 1, **dadurch gekennzeichnet, dass** der Prozessor (20) dazu ausgelegt ist, eine gesicherte Verbindung mit dem Netzwerk-Computer (12) aufzubauen.

3. Mikrocontroller (10) nach Anspruch 1 oder 2, **dadurch gekennzeichnet, dass** der Prozessor (20) dazu ausgelegt ist, eine Verbindung mit dem Netzwerk-Computer (12) unter Verwendung des Secure Remote Protokolls, SRP-Protokolls, aufzubauen.

4. Mikrocontroller (10) nach einem der Ansprüche 1 bis 3, **gekennzeichnet durch** ein Display (24) zum Anzeigen von Informationen.

5. Mikrocontroller (10) nach Anspruch 4, **dadurch gekennzeichnet, dass** das Display als ein E-Ink-Display (26) ausgeführt ist.

6. Verfahren für die Kommunikation zwischen einem Mikrocontroller (10), der einen Prozessor, einen Speicherbaustein und ein Netzwerkmodul aufweist, und einem Netzwerk-Computer (12), der einen Prozessor, einen Speicherbaustein und ein Netzwerkmodul aufweist, umfassend die nachfolgenden Schritte:

   - Initiierung (S100) des Mikrocontrollers (10), wobei die Initiierung (S100) des Mikrocontrollers (10) folgende Schritte umfasst:

      ∘ Aufbau einer Verbindung (S102) zwischen dem Mikrocontroller (10) und dem Netzwerk-Computer (12);
      ∘ Anfrage (S104) des Mikrocontrollers (10) gegenüber dem Netzwerk-Computer (12) nach einem digitalen Zertifikat;
      ∘ Ausstellung (S106) eines digitalen Zertifikats durch den Netzwerk-Computer (12);
      ∘ Übermittlung (S108) des digitalen Zertifikats von dem Netzwerk-Computer (12) an den Mikrocontroller (10); und
      ∘ Speichern (S110) des digitalen Zertifikats im Speicherbaustein des Mikrocontrollers (10); sowie

   - Austausch (S200) von Nutzerdaten zwischen dem Mikrocontroller (10) und dem Netzwerk-Computer (12), wobei der Austausch (200) der Nutzerdaten folgende Schritte umfasst:

◦ Aufbau einer Verbindung (S202) zwischen dem Mikrocontroller (10) und dem Netzwerk-Computer (12);
◦ Verifikation (S204) des digitalen Zertifikats des Mikrocontrollers (10) durch den Netzwerk-Computer (12); und
◦ Austausch (206) der Nutzerdaten zwischen dem Mikrocontroller (10) und dem Netzwerk-Computer (12), sofern die vorausgegangene Verifikation des digitalen Zertifikats des Mikrocontrollers (10) durch den Netzwerk-Computer (12) erfolgreich war.

7. Verfahren nach Anspruch 6, **dadurch gekennzeichnet, dass** beim Aufbau (S102) einer Verbindung zwischen dem Mikrocontroller (10) und dem Netzwerk-Computer (12) während der Initiierung (S100) des Mikrocontrollers (10) eine gesicherte Verbindung hergestellt wird.

8. Verfahren nach Anspruch 6 oder 7, **dadurch gekennzeichnet, dass** bei der Initiierung (S100) des Mikrocontrollers (10) ein Zero-Knowledge-Verfahren zum Einsatz kommt.

9. Verfahren nach Anspruch 8, **dadurch gekennzeichnet, dass** beim Zero-Knowledge Verfahren ein Password-Authenticated-Key agreement Verfahren, PAKE-Verfahren, verwendet wird.

10. Verfahren nach einem der Ansprüche 6 bis 9, **dadurch gekennzeichnet, dass** bei der Initiierung (S100) des Mikrocontrollers (10) das Secure Remote Password Protokoll, SRP-Protokoll, verwendet wird.

11. Verfahren nach einem der Ansprüche 6 bis 10, **dadurch gekennzeichnet, dass** beim Austausch (S200) von Daten zwischen dem Mikrocontroller (10) und dem Netzwerk-Computer (12) ein verschlüsselter Austausch unter Verwendung des Transport Layer Security Protokolls, TLS-Protokoll, erfolgt.

12. Verfahren nach Anspruch 11, **dadurch gekennzeichnet, dass** bei dem Transport Layer Security Protokoll, TLS Protokoll, ein zweiseitiges Transport Layer Security Protokoll, TLS-Protokoll, verwendet wird, bei dem sowohl das digitale Zertifikat des Mikrocontrollers (10) durch den Netzwerk-Computer (12) verifiziert wird, als auch das digitale Zertifikat des Netzwerk-Computers (12) durch den Mikrocontroller (10) verifiziert wird.

13. Verfahren nach einem der Ansprüche 6 bis 12, **dadurch gekennzeichnet, dass** bei der Initiierung (S100) des Mikrocontrollers (10) zusätzlich eine Firmware von dem Netzwerk-Computer (12) an den Mikrocontroller (10) übertragen und auf dem Mikrocontroller (10) installiert wird.

14. Netzwerk-Computer (12) mit einem Prozessor (20), einem Speicherbaustein (16) und einem Netzwerkmodul (18), wobei der Prozessor (20) dazu ausgelegt ist,

- eine Verbindung mit einem Mikrocontroller (10) aufzubauen;
- ein digitales Zertifikat auszustellen;
- das digitale Zertifikat an den Mikrocontroller (10) zu übermitteln;
- das digitale Zertifikat des Mikrocontrollers (10) zu verifizieren; und
- mit dem Mikrocontroller (10) Nutzerdaten auszutauschen, sofern die vorherige Verifikation des digitalen Zertifikats des Mikrocontrollers (10) erfolgreich war.

15. Kommunikationssystem (14) umfassend einen Mikrocontroller (10) nach einem der Ansprüche 1 bis 5 sowie einen Netzwerk-Computer (12) nach Anspruch 14.

Fig. 1

269,00 €

Fig. 2

Fig. 3

EP 3 663 956 A1

```
┌─────────────────────────┐
│   Initiierung des       │ ╲_____ S100
│   Mikrocontrollers      │
└─────────────────────────┘
            │
            ▼
┌─────────────────────────┐
│  Austausch von Nutzerdaten │ ╲_____ S200
│ zwischen dem Mikrocontroller │
│        und dem          │
│   Netzwerk-Computer     │
└─────────────────────────┘
```

Fig. 4

S100

S102 — Aufbau einer Verbindung zwischen dem Mikrocontroller und dem Netzwerk-Computer

S104 — Anfrage des Mikrocontrollers gegenüber dem Netzwerk-Computer nach einem digitalen Zertifikat

S106 — Ausstellung eines digitalen Zertifikats durch den Netzwerk-Computer

S108 — Übermittlung des digitalen Zertifikats von dem Netzwerk-Computer an den Mikrocontroller

S110 — Speichern des digitalen Zertifikats im Speicherbaustein des Mikrocontrollers

Fig. 5

EP 3 663 956 A1

```
                              ┌────────────────────────┐
                              │   Aufbau einer Verbindung │
     S202 ─────────────────── │ zwischen dem Mikrocontroller │          S200
                              │ und dem Netzwerk-Computer │           ↙
                              └────────────────────────┘
                                          │
                                          ▼
                              ┌────────────────────────┐
                              │   Verifikation des digitalen │
     S204 ─────────────────── │ Zertifikats des Mikrocontrollers │
                              │  durch den Netzwerk-Computer │
                              └────────────────────────┘
```

Verifikation erfolgreich                                Verifikation  nicht erfolgreich

                    S206                         S208

```
┌────────────────────────┐      ┌────────────────────────┐
│  Austausch der Nutzerdaten │      │                        │
│ zwischen dem Mikrocontroller │      │ kein Austausch der Nutzerdaten │
│  und dem Netzwerk-Computer │      │                        │
└────────────────────────┘      └────────────────────────┘
```

Fig. 6

Request | Response   Details

POST    https://saas-iothub-7867d48b-ec34-4d48-b0a7-82f2c966daf5.azure-devices.net/devices/1hi0itk/messages/events?api-version=2018-06-30 HTTP/1.1

Connection          Keep-Alive

Accept              application/json

Authorization       SharedAccessSignature sr=saas-iothub-7867d48b-ec34-4d48-b0a7-82f2c966daf5.azure-devices.net%2Fdevices%2F1hi0itk&sig=YfexlHXzf7%2FdMdGokK875F3tM5ht3gqnFfsCuKhLDvc%3D&se=1533305347

User-Agent          Microsoft.Azure.Devices.Client/1.17.1 (.Net Core 4.6.26614.01; Microsoft Windows 10.0.17134; X64)

Content-Length      86

Host                saas-iothub-7867d48b-ec34-4d48-b0a7-82f2c966daf5.azure-devices.net

```
{
    "humidity": 64.02409783286234,
    "presssure": 577.0351456836961,
    "temp": 67.27590539831478

}
```

EP 3 663 956 A1

Fig. 7

Multi-tenant IoT PKI-Lösung mit symbiotischer Sicherheit

IoT Node Gruppe A

...

MQTT über TLS oder dergleichen durch Azure IoT Device SDK implementieren

IoT Node A.1000

IoT Node A.1

pbTLS

Telemetrie senden / Befehle empfangen

Schlüssel können entweder für eine tenant-basierte Column Level Encryption (CLE) verwendet werden oder ein einzelner Transparent-Data-Encryption-Schlüssel (TDE) verschlüsselt die gesamte Datenbank

Kann als zentraler Hub oder als mehrere Hubs, d.h. einer für jeden Tenant, erstellt werden

HTTPS

bereitstellen

zum Entschlüsseln verwenden

Sicherer Schlüssel- und Zertifikatsspeicher

Secure Store Group A

Azure Key Vault

Geheimer CLE-Schlüssel A

AKV A

Schlüsselpaar/Zertifikat A.1000

Schlüsselpaar/Zertifikat A.1

...

Registriert Geräte, führt Lastausgleich über mehrere Hubs durch

IoT Hub

zum Entschlüsseln verwenden

zum Speichern über AKV verwenden

bereitstellen

zum Ver-/Entschlüsseln der Datenbank in Echtzeit verwenden

Multi-Root-Gerät CA

Root-Gerät CA A

CA-Operationsaufgaben

Device Provisioning Service

verwenden

Hub-interne HTTPS

Fig. 8

Azure IoT-Referenzbereitstellung

EP 3 663 956 A1

MCU

Flash

SRAM

Anwendungsdatenbus

Isolierter DatenBus

✕ nach Schreiben blockiert

Encryption Engine

AES

SHA-256

HMAC

Nur lesen

eFuse/OTP    S/N

Schlüssel 1

...

Schlüssel n

Fig. 9

Europäisches
Patentamt

European
Patent Office

Office européen
des brevets

**EUROPÄISCHER RECHERCHENBERICHT**

**Nummer der Anmeldung**

EP 18 20 9811

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 593 897 B1 (SIEMENS AG [DE]) 28. Februar 2018 (2018-02-28) * Zusammenfassung; Abbildungen 1-3 * * Absatz [0032] - Absatz [0033] * * Absatz [0038] * ----- | 1-15 | INV. G06F21/72 G06F21/85 G06F21/60 G06F21/73 G06F21/44 |
| X | US 2005/228886 A1 (CAIN ADAM [US] ET AL) 13. Oktober 2005 (2005-10-13) * Zusammenfassung; Abbildungen 1-6 * * Absatz [0045] - Absatz [0051] * ----- | 1-15 | |
| A | EP 0 456 386 A2 (INT COMPUTERS LTD [GB]) 13. November 1991 (1991-11-13) * Zusammenfassung; Abbildungen 1-4 * * Seite 1, Zeile 20 - Zeile 28 * ----- | 1-15 | |
| A | DE 199 61 151 A1 (IBM [US]) 3. August 2000 (2000-08-03) * Zusammenfassung; Abbildungen 1-6 * * Seite 1, Zeile 55 - Zeile 68 * ----- | 1-15 | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| München | 8. Mai 2019 | Harms, Christoph |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 9811

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2019

| Im Recherchenbericht angeführtes Patentdokument | Datum der Veröffentlichung | Mitglied(er) der Patentfamilie | Datum der Veröffentlichung |
|---|---|---|---|
| EP 2593897 B1 | 28-02-2018 | CN 103098414 A | 08-05-2013 |
| | | DE 102010044518 A1 | 08-03-2012 |
| | | EP 2593897 A1 | 22-05-2013 |
| | | US 2013173922 A1 | 04-07-2013 |
| | | WO 2012031820 A1 | 15-03-2012 |
| US 2005228886 A1 | 13-10-2005 | CN 101099143 A | 02-01-2008 |
| | | EP 1738274 A2 | 03-01-2007 |
| | | KR 20070032650 A | 22-03-2007 |
| | | US 2005228886 A1 | 13-10-2005 |
| | | WO 2005096701 A2 | 20-10-2005 |
| EP 0456386 A2 | 13-11-1991 | AU 634653 B2 | 25-02-1993 |
| | | DE 69130461 D1 | 17-12-1998 |
| | | DE 69130461 T2 | 10-06-1999 |
| | | EP 0456386 A2 | 13-11-1991 |
| DE 19961151 A1 | 03-08-2000 | DE 19961151 A1 | 03-08-2000 |
| | | US 6981147 B1 | 27-12-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GARTNER.** *Magic Quadrant for Cloud Infrastructure as a Service,* 19. August 2013, https://web.archive.org/web/ 20130825054202/http://www.gartner.com/technology/reprints.do?id= 1-1IMDMZ5&ct=130819&st=sb
- **AWS.** *AWS IoT,* 2018, https://aws.amazon.com/iot
- **AWS.** *Amazon FreeRTOS,* 2018, https://aws.amazon.com/freertos
- **AWS.** *Getting Started with Amazon FreeRTOS,* 2018, https://aws.amazon.com/freertos/getting-started
- **AWS.** *Amazon FreeRTOS Qualification Program Developer Guide,* 31. Juli 2018, https://d1.awsstatic.com/product-marketing/iot/ Amazon-FreeRTOS-Qualification-Program-Developer-Guide-V1.0.0.pdf
- Recommendations for implementing the Strategic initiative INDUSTRIE 4.0. National Academy of Science and Engineering, April 2013, 23, , 46-47
- **LEE, E. A.** Cyber Physical Systems: Design Challenges. *11th IEEE Symposium on Object Oriented Real-Time Distributed Computing (ISORC),* 2008, 363-369
- **SERGEI P. SKOROBOGATOV.** *Copy Protection in Modern Microcontrollers,* 2000, https://www.cl.cam.ac.uk/_sps32/mcu
- **CLEMENS VASTERS.** Service Assisted Communication for Connected Devices. *Microsoft Developer Blog,* 09. Februar 2014, https://blogs.msdn.microsoft.com/clemensv/2014/02/09/ service-assisted-communication-for-connected-devices
- **ROY THOMAS FIELDING.** *Architectural Styles and the Design of Networkbased Software Architectures,* 2000, https://www. ics.uci.edu/_fielding/pubs/dissertation/top.htm
- **MICROSOFT.** *Azure IoT Services Reference Architecture,* 2018, https://aka.ms/iotrefarchitecture
- *Docker Public Repository,* https://hub.docker.com/r/mitmproxy/mitmproxy
- **MICROSOFT.** *Windows Subsystem for Linux Documentation,* https://docs.microsoft.com/en-us/windows/wsl/about
- **MICROSOFT.** *What is Azure Active Directory?,* 2018, https://docs.microsoft.com/en-us/azure/active-directory/ fundamentals/active-directory-whatis

- **MICROSOFT.** *What is Azure Key Vault?,* 2018, https://docs.microsoft.com/en-us/azure/key-vault/key-vault-whatis
- **MORITZ LIPP ; MICHAEL SCHWARZ ; DANIEL GRUSS ; THOMAS PRESCHER ; WERNER HAAS ; ANDERS FOGH ; JANN HORN ; STEFAN MANGARD ; PAUL KOCHER ; DANIEL GENKIN.** Meltdown: Reading Kernel Memory from User Space. *27th USENIX Security Symposium,* 2018
- **MORITZ LIPP ; MICHAEL SCHWARZ ; DANIEL GRUSS ; THOMAS PRESCHER ; WERNER HAAS ; ANDERS FOGH ; JANN HORN ; STEFAN MANGARD ; PAUL KOCHER ; DANIEL GENKIN.** Spectre Attacks: Exploiting Speculative Execution. *40th IEEE Symposium on Security and Privacy,* 2019
- Report on Microsoft Windows 8 and TPM. German Federal Office for Information Security, August 2013
- **MATUS NEMEC ; MAREK SYS ; PETR SVENDA ; DUSAN KLINEC ; VASHEK MATYAS.** The Return of Coppersmith's Attack: Practical Factorization of Widely Used RSA Moduli. *ACM Conference on Computer and Communications Security (CCS) 2017,* https://acmccs.github. io/papers/p1631-nemecA.pdf
- **MICROSOFT AZURE ; NICOLE BERDY.** *Device provisioning: Identity attestation with TPM,* November 2017, https://azure.microsoft.com/de-de/blog/device-provisioning-identity-attestation-with-tpm
- **MICROSOFT AZURE.** *Control access to IoT Hub,* Juli 2018, https://docs.microsoft.com/en-us/azure/iot-hub/ iot-hub-devguide-security
- **MICROSOFT AZURE.** *Support additional protocols for IoT Hub,* November 2017, https://docs.microsoft.com/en-us/azure/ iot-hub/iot-hub-protocol-gateway
- **MICROSOFT AZURE.** *Understand and use Azure IoT Hub SDKs,* Marz 2018, https://docs.microsoft.com/en-us/ azure/iot-hub/iot-hub-devguide-sdks
- **MICROSOFT AZURE.** *Provisioning devices with Azure IoT Hub Device Provisioning Server,* Mai 2017, https://docs.microsoft. com/en-us/azure/iot-dps/about-iot-dps

- **MICROSOFT AZURE.** *Conceptual understanding of X.509 CA certificates in the IoT industry,* September 2017, https://docs. microsoft.com/en-us/azure/iot-hub/iot-hub-x509ca-concept
- **MICROSOFT.** *Get started with Key Vault certificates,* 2018, https://docs.microsoft.com/en-us/azure/sql-database/ transparent-data-encryption-byok-azure-sql
- Security for Internet-enabled Products. PointBlank Security by Steen Harbach AG, 2018
- sS2E Module Manual. PointBlank Security by Steen Harbach AG, 2018
- **T. WU.** *SRP Protocol Design,* 1998, http://srp. stanford.edu/design.htm